Europäisches Patentamt

European Patent Office

Office européen des brevets

(19)

(11) EP 1 182 891 A2

(12) **EUROPEAN PATENT APPLICATION**

(43) Date of publication:
27.02.2002 Bulletin 2002/09

(51) Int Cl.7: **H04N 9/04**

(21) Application number: 01119518.7

(22) Date of filing: 14.08.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 15.08.2000 JP 2000246488

(71) Applicant: **Sanyo Electric Co., Ltd.
Moriguchi-shi, Osaka (JP)**

(72) Inventors:
• **Murata, Haruhiko, Sanyo Electric Co., Ltd.
Moriguchi-city, Osaka 570-8677 (JP)**
• **Mori, Yukio, Sanyo Electric Co., Ltd.
Moriguchi-city, Osaka 570-8677 (JP)**
• **Maenaka, Akihiro, Sanyo Electric Co., Ltd.
Moriguchi-city, Osaka 570-8677 (JP)**

(74) Representative: **Glawe, Delfs, Moll & Partner
Patentanwälte Postfach 26 01 62
80058 München (DE)**

(54) **Color separation circuit in a color camera**

(57) In a color separation circuit of a single chip color camera, gain control means for controlling a gain for each of color filters is provided in a stage preceding correlated value detection means, and the correlated value detection means detects, on the basis of signals at all pixels in a block composed of M by N pixels around the pixel to be processed which is inputted through the gain control means, the direction in which there is a strong correlation out of a plurality of types of directions centered around the pixel to be processed.

FIG. 1

**Description**

BACKGROUND OF THE INVENTION

Field of the Invention

The present invention relates to a color separation circuit of a single chip color video camerautilizing a solid-state image pick-up device.

Description of the Prior Art

(1) In a single chip color camera utilizing a solid-state image pick-up device such as a CCD (Charge Coupled Device), there is provided a color filter in a particular color (e.g., any one of three colors R, G, and B) corresponding to each of pixels composing the solid-state image pick-up device. A signal from each of the pixels composing the solid-state image pick-up device, which corresponds to the particular color, is processed to make color separation, thereby producing R, G, and B signal video signals.

Conventionally, the color separation in the color camera represents processing for separating and producing a luminance signal and a chrominance signal from a CCD signal. Currently, it represents processing for producing RGB signals at the positions of all pixels from the CCD signal in many cases. For this reason, the color separation from the CCD signal is also referred to as chrominance signal interpolation and pixel interpolation in many cases.

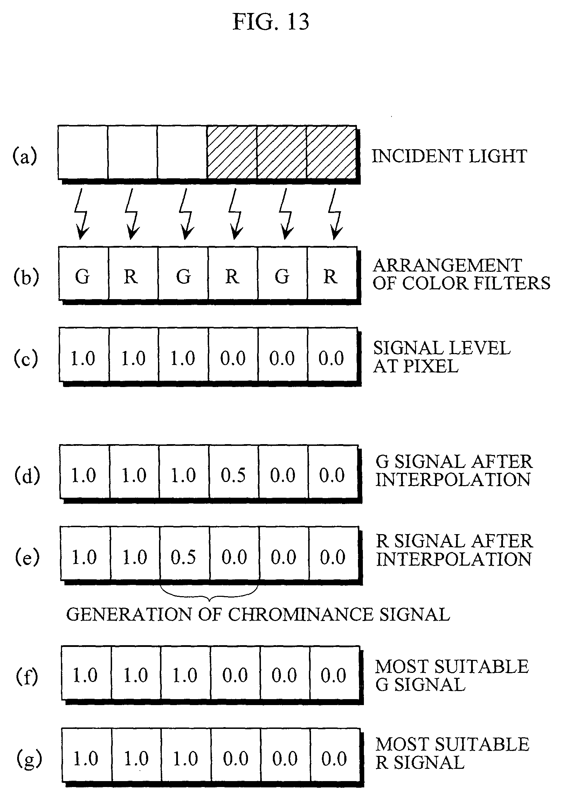

Fig. 13 illustrates conventional color separation processing.

Consider a case where G and R filters are alternately arranged in the horizontal direction, for example, a G filter, an R filter, a G filter, an R filter, ⋯, as shown in Fig. 13 (b), for example. In such a case, a G signal is not obtained from a pixel at which the R filter is arranged, for example. Accordingly, a G signal corresponding to the pixel is found by interpolation using signals at the adjacent pixels. That is, the average of the signal from the first G pixel and the signal from the third G pixel shown in Fig. 13 (b) is calculated, thereby making it possible to obtain a G signal corresponding to the second R pixel. This method utilizes a correlation in the horizontal direction, as is well known.

In such a simple interpolation method, however, it is known that a false chrominance signal is generated at the boundary (an edge) where black and white portions are adjacent to each other on a screen. The generation of the false chrominance signal will be simply described.

Light from an image which is rapidly changed from white to black, as shown in Fig. 13 (a), shall be given to the solid-state image pick-up device in an arrangement of filters shown in Fig. 13 (b). At this time, it is assumed that a signal output value from each of the pixels takes a value, as shown in Fig. 13 (c). That is, all the signal output values from the respective pixels corresponding to the white portion are 1.0, and all the signal output values from the respective pixels corresponding to the black portion are zero.

When the G signal for the pixel at which the R filter is arranged and the R signal for the pixel at which the G filter is arranged are interpolated by the above-mentioned interpolation method, the G signal and the R signal which have been interpolated are as shown in Figs. 13 (d) and 13 (e). That is, it is found that the false chrominance signal is generated at the boundary between the white and black potions. The most suitable G signal for the pixel at which the R filter is arranged and the most suitable R signal for the pixel at which the G filter is arranged must be as shown in Fig. 13 (f) and 13 (g).

As a measure to avoid the generation of the false chrominance signal, a method of making it difficult to make the false chrominance signal conspicuous utilizing an optical low-pass filter and an electrical low-pass filter, and a method of restraining a chrominance signal at the above-mentioned boundary (edge) are considered (for example, Japanese Patent Application No. 1993-8361 by the applicant of the present invention in the latter case).

In the method simply utilizing the optical low-pass filter, however, the level of the false chrominance signal can be lowered. However, the frequency characteristics of the signal itself obtained from the solid-state image pick-up device are also lowered as the level thereof is lowered, so that the resolution itself of the obtained signal is lowered. In the method utilizing the electrical low-pass filter, the level of the false chrominance signal can be lowered. On the contrary, an area where the false chrominance signal is generated is enlarged. Accordingly, a complete solution is not found. In the method of restraining the chrominance signal at the boundary, the chrominance signal which should inherently exist is also restrained, so that a color at the boundary may be lost.

(2) Therefore, the inventors of the present invention have already developed a color separating method for providing as interpolation means for generating a plurality of chrominance signal components at an arbitrary pixel to be processed, first interpolation processing means suitable for a case where there is a strong correlation in the horizontal direction and second interpolation processing means suitable for a case where there is a strong correlation in the vertical direction, and providing first correlated value calculation means for calculating a correlated value in the horizontal direction at the pixel to be processed and second correlated value calculation means for calculating the correlated value in the vertical direction of the pixel to be processed, for weighting an interpolated value found by the first interpolation processing means, weighting an interpolated value found by the second interpolation processing means, and adding the weighted interpolated values to find a plurality of color components for the pixel to be processed has already been developed (Japanese Patent No. 2931520).

In a first embodiment described in the Japanese Patent, each of the correlated value calculation means calculates a correlated value using only a signal output value from a pixel at which a G filter is arranged. However, the number of pixels at which G filters are respectively arranged is one-half of the whole number of pixels. If an attempt to calculate a correlated value using only the signal output value from the pixel at which the G filter is arranged is made, therefore, an accurate correlated value cannot, in some cases, be calculated.

Therefore, it is considered that correlated values are calculated using the signal output values from all the pixels. In the case of a monochrome image or an image having a low color level, therefore, the signal output value from each of the pixels at which R, G, and B filters are arranged is considered as luminance, thereby making it possible to calculate an accurate correlated value. When the color level is high, however, the signal output value from each of the pixels at which the R, G, and B filters are respectively arranged is not considered as luminance, thereby making it impossible to calculate an accurate correlated value.

In a third embodiment described in the above-mentioned Japanese Patent, correlated values are found by weighting and adding both the correlated values depending on the color level such that correlated values calculated using signal output values from all pixels are used when the color level is low, while correlated values calculated using only a signal output value from a pixel at which a G filter is arranged is used when the color level is high.

An object of the present invention is to provide a color separation circuit of a single chip color camera capable of calculating a correlated value higher in precision and preventing a false chrominance signal from being generated as well as improving color reproducibility.

(3) In the above-mentioned Japanese Patent No. 2931520, interpolation processing, that is, primary color correlated color separation processing is performed utilizing the property of the ratio of a G signal to an R signal or a B signal being approximately equal between adjacent pixels because the local change of a chrominance signal is smaller than the change in luminance and the property of the ratio of a low-frequency component to a high-frequency component of a particular color component being equal in the other color component, or interpolation processing, that is, color difference correlated color separation processing is performed utilizing the property of the difference between a G signal and an R signal or a B signal being approximately equal between adjacent pixels because the local change of a chrominance signal is small and the property of the difference between a low-frequency component and a high-frequency component of a particular color component being equal in another color component.

In the primary color correlated color separation processing, when a large video signal having no correlation with another portion, for example, noise is inputted into an input video signal, however, interpolation processing is performed through a dividing circuit. Accordingly, the noise is emphasized, thereby making it impossible to solve R, G, and B dot noises produced in a dark portion of an image.

In the color difference correlated color separation processing, when an object having the same color is illuminated by lighting, a false chrominance signal generated by a luminance change at the boundary between an object and a shadow by the illumination cannot be solved.

An object of the present invention is to provide, in a single chip color video camera using a solid-state image pick-up device, a color separation circuit for preventing a false chrominance signal from being generated in color separation processing for generating a plurality of chrominance signal components as well as being high in sharpness and superior in color reproducibility.

SUMMARY OF THE INVENTION

A first color separation circuit of a single chip color camera according to the present invention is a color separation circuit of a single chip color camera for subjecting a signal from a solid-state image pick-up device having a plurality of types of color filters which differ in spectral sensitivity characteristics arranged therein, respectively, so as to correspond to pixels to color separation processing, characterized by comprising a plurality of types of interpolation processing means for respectively producing a plurality of chrominance signal components at the arbitrary pixel to be processed and suitable for a case where there is a strong correlation in each of a plurality of types of directions centered at the pixel to be processed from the chrominance signal components at the pixel to be processed and the pixels around the pixel to be processed; correlated value detection means for detecting the direction in which there is a strong correlation out of the plurality of types of directions centered at the pixel to be processed on the basis of the chrominance signal components at the pixel to be processed and the pixels around the pixel to processed; and means for finding the plurality of chrominance signal components at the pixel to be processed on the basis of the direction in which there is a strong correlation which is detected by the correlated value detection means and each of the chrominance signal components produced by the interpolation processing means, gain control means for controlling a gain for each of the color filters being provided in a stage preceding the correlated value detection means, the correlated value detection means detecting the direction in which there is a strong correlation out of the plurality of types of directions centered at the pixel to be processed on the basis of signals at all the pixels in a block composed of M by N pixels centered at the pixel to be processed which are inputted through the gain control means.

An example of the gain control means is one for carrying out the gain control on the basis of color information obtained from the whole of a screen. In this case, used as each of the interpolation means may be one for calculating the plurality of chrominance signal components at the pixel to be processed on the basis of the chrominance signal components at the pixel to be processed and the pixels around the pixel to be processed after the gain control processing is performed by the gain control means.

Used as the gain control means may be one for dividing a screen into a plurality of areas and controlling the gain for each of the color filters on the basis of the results of integration of chrominance signals for the areas.

A second color separation circuit of a single chip color camera according to the present invention is a color separation circuit of a single chip color camera for subjecting a signal from a solid-state image pick-up device having a plurality of types of color filters which differ in spectral sensitivity characteristics arranged therein, respectively, so as to correspond to pixels to color separation processing, characterized by comprising first interpolation processing means for producing a plurality of chrominance signal components at the arbitrary pixel to be processed and suitable for a case where there is a strong correlation in the horizontal direction at the pixel to be processed from chrominance signal components at the pixel to be processed and the pixels around the pixel to be processed; second interpolation processing means for producing a plurality of chrominance signal components at the pixel to be processed and suitable for a case where there is a strong correlation in the vertical direction at the pixel to be processed from the chrominance signal components at the pixel to be processed and the pixels around the pixel to be processed; correlated value calculation means for calculating correlated values in the horizontal direction and the vertical direction at the pixel to be processed on the basis of the chrominance signal components at the pixel to be processed and the pixels around the pixel to processed; and weighting and addition means for weighting each of the chrominance signal components produced by the first interpolation processing means, weighting each of the chrominance signal components produced by the second interpolation processing means, and adding the weighted chrominance signal components depending on the correlated values in the horizontal direction and the vertical direction which are calculated by the correlated value calculation means, to find the plurality of chrominance signal components at the pixel to be processed, gain control means for controlling a gain for each of the color filters being provided in a stage preceding the correlated value detection means, the correlated value calculation means calculating the correlated values in the horizontal direction and the vertical direction at the pixel to be processed on the basis of signals at all the pixels in a block composed of M by N pixels centered at the pixel to be processed which are inputted through the gain control means.

An example of the gain control means is one for carrying out the gain control on the basis of color information obtained from the whole of a screen. In this case, used as the first interpolation means and the second interpolation means may be one for calculating a plurality of chrominance signal components at the pixel to be processed on the basis of the chrominance signal components at the pixel to be processed and the pixels around the pixel to be processed after the gain control processing is performed by the gain control means.

Used as the gain control means may be one for dividing a screen into a plurality of areas and controlling the gain for each of the color filters on the basis of the results of integration of chrominance signals for the areas.

In a color separation circuit of a single chip color camera for processing a signal from a solid-state image pick-up device having a plurality of types of color filters which differ in spectral sensitivity characteristics arranged in a Mosaic shape therein, respectively, so as to correspond to pixels through an automatic gain control circuit for carrying out gain control, a third color separation circuit of the single chip color camera according to the present invention is characterized by comprising two or more types of color separation means, which differ in a chrominance signal component producing system, provided in order to produce a plurality of chrominance signal components at the arbitrary pixel to be processed on the basis of chrominance signal components at the pixel to be processed and the pixels around the pixel to be processed; and synthesis means for synthesizing the chrominance signal components respectively produced by the color separation means on the basis of the signal from the solid-state image pick-up device.

An example of the synthesis means is one for synthesizing the chrominance signal components produced by the respective color separation means on the basis of the level of the signal from the solid-state image pick-up device.

An example of the synthesis means is one for synthesizing the chrominance signal components produced by the respective color separation means on the basis of the gain, of the automatic gain control circuit, corresponding to the level of the signal from the solid-state image pick-up device.

Examples of the color separation means to be provided are primary color correlated color separation means for producing a plurality of chrominance signal components at the arbitrary pixel to be processed utilizing the correlation of the ratio of colors in the horizontal direction or the vertical direction on the basis of the chrominance signal components at the pixel to be processed and the pixels around the pixel to be processed and color difference correlated color separation means for producing the plurality of chrominance signal components at the arbitrary pixel to be processed utilizing the correlation of the difference between colors in the horizontal direction or the vertical direction on the basis of the chrominance signal components at the pixel to be processed and the pixels around the pixel to be processed.

In this case, an example of the synthesis means is one for synthesizing the chrominance signal components produced by both the color separation means such that each of the chrominance signal components produced by the primary color correlated color separation means is increased when the level of the signal from the solid-state image pick-up device is high, while synthesizing the chrominance signal components produced by both the color separation means such that each of the chrominance signal components produced by the color difference correlated color separation means is increased when the level of the signal from the solid-state image pick-up device is low.

Alternatively, an example of the synthesis means is one for synthesizing the chrominance signal components produced by both the color separation means such that each of the chrominance signal components produced by the color difference correlated color separation means is increased when the gain, of the automatic gain control circuit, corresponding to the level of the signal from the solid-state image pick-up device is large, while synthesizing the chrominance signal components produced by both the color separation means such that each of the chrominance signal components produced by the primary color correlated color separation means is increased when the gain of the automatic gain control circuit is small.

There may be provided correlated value detection means for finding correlated values in the horizontal direction and the vertical direction at the pixel to be processed, each of the primary color correlated color separation means and the color difference correlated color separation means may comprise horizontal direction processing means for producing a chrominance signal component suitable for a case where there is a strong correlation in the horizontal direction and vertical direction processing means for producing a chrominance signal component suitable for a case where there is a strong correlation in the vertical direction, and each of the primary color correlated color separation means and the color difference correlated color separation means may weight each of the chrominance signal components produced by the horizontal direction processing means, weight each of the chrominance signal components produced by the vertical direction processing means, and add the weighted chrominance signal components depending on the correlated values in the horizontal direction and the vertical direction which are detected by the correlated value detection means, to find a plurality of chrominance signal components at the pixel to be processed.

Examples of the color separation means to be provided are primary color correlated color separation means for producing a plurality of chrominance signal components at the arbitrary pixel to be processed utilizing the correlation of the ratio of colors in the horizontal direction or the vertical direction on the basis of the chrominance signal components at the pixel to be processed and the pixels around the pixel to be processed, and color difference correlated color separation means for producing the plurality of chrominance signal components at the arbitrary pixel to be processed utilizing the correlation of the difference between colors in the horizontal direction or the vertical direction on the basis of the chrominance signal components at the pixel to be processed and the pixels around the pixel to be processed.

In this case, an example of the synthesis means is one for synthesizing the chrominance signal components produced by both the color separation means such that each of the chrominance signal components produced by the adaptive correlated color separation means is increased when the level of the signal from the solid-state image pick-up device is high, while synthesizing the chrominance signal components produced by both the color separation means such that each of the chrominance signal components produced by the color difference correlated color separation means is increased when the level of the signal from the solid-state image pick-up device is low.

Alternatively, an example of the synthesis means is one for synthesizing the chrominance signal components produced by both the color separation means such that each of the chrominance signal components produced by the color difference correlated color separation means is increased when the gain, of the automatic gain control circuit, corresponding to the level of the signal from the solid-state image pick-up device is large, while synthesizing the chrominance signal components produced by both the color separation means such that each of the chrominance signal components produced by the adaptive correlated color separation means is increased when the gain of the automatic gain control circuit is small.

There may be provided correlated value detection means for finding correlated values in the horizontal direction and the vertical direction at the pixel to be processed, each of the adaptive correlated color separation means and the color difference correlated color separation means may comprise horizontal direction processing means for producing a chrominance signal component suitable for a case where there is a strong correlation in the horizontal direction and vertical direction processing means for producing a chrominance signal component suitable for a case where there is a strong correlation in the vertical direction, and each of the adaptive correlated color separation means and the color difference correlated color separation means may weight each of the chrominance signal components produced by the horizontal direction processing means, weight each of the chrominance signal components produced by the vertical direction processing means, and add the weighted chrominance signal components depending on the correlated values in the horizontal direction and the vertical direction which are detected by the correlated value detection means, to find the plurality of chrominance signal components at the pixel to be processed.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram showing a color separation circuit according to a first embodiment;

Fig. 2 is a schematic view showing the configuration of a CCD 1 and its driving circuit;

Fig. 3 is a timing chart showing an input signal and an output signal of a selection circuit 18;

Fig. 4 is a block diagram showing the basic configuration of a horizontal interpolation circuit 24, a vertical interpolation circuit 25, a horizontal direction correlated value calculation circuit 28, and a vertical direction correlated value calculation circuit 29;

Fig. 5 is a schematic view for selecting the pattern of pixels composing a block to be processed in the horizontal interpolation circuit 24, the vertical interpolation circuit 25, the horizontal direction correlated value calculation circuit 28, and the vertical direction correlated value calculation circuit 29;

Fig. 6 is a schematic view for explaining a primary color correlation processing method by the horizontal interpolation circuit 24 and the vertical interpolation circuit 25;

Fig. 7 is a schematic view for explaining a method of calculating a correlated value using all signals by the horizontal direction correlated value calculation circuit 28 and the vertical direction correlated value calculation circuit 29;

Fig. 8 is a block diagram showing a color separation circuit in a second embodiment;

Fig. 9 is a block diagram showing a color separation circuit in a third embodiment;

Fig. 10 is a schematic view showing a plurality of RGB integration areas set in a screen;

Fig. 11 is a schematic view for explaining a method of calculating R, G, and B gains for a predetermined pixel;

Fig. 12 is a block diagram showing a color separation circuit according to a fourth embodiment;

Fig. 13 is a schematic view for explaining conventional color separation processing;

Fig. 14 is a block diagram showing a color separation circuit according to a fifth embodiment;

Fig. 15 is a schematic view showing the configuration of a CCD 1 and its driving circuit;

Fig. 16 is a timing chart showing an input signal and an output signal of a selection circuit 18;

Fig. 17 is a block diagram showing the configuration of a primary color correlated color separator 24;

Fig. 18 is a block diagram showing the configuration of a color difference correlated color separator 25;

Fig. 19 is a block diagram showing the basic configuration of a primary-color-correlation horizontal interpolation circuit 26, a primary-color-correlation vertical interpolation circuit 27, a color-difference-correlation horizontal interpolation circuit 29, a color-difference-correlation vertical interpolation circuit 30, a horizontal direction correlation detection circuit 23a, and a vertical direction correlation detection circuit 23b;

Fig. 20 is a schematic view for selecting the pattern of pixels composing a block to be processed in the primary-color-correlation horizontal interpolation circuit 26, the primary-color-correlation vertical interpolation circuit 27, the color-difference-correlation horizontal interpolation circuit 29, the color-difference-correlation vertical interpolation circuit 30, the horizontal direction correlation detection circuit 23a, and the vertical direction correlation detection circuit 23b;

Fig. 21 is a schematic view for explaining a primary color correlation processing method by the primary-color-correlation horizontal interpolation circuit 26 and the primary-color-correlation vertical interpolation circuit 27;

Fig. 22 is a schematic view for explaining a method of calculating a correlated value using only a G signal by the horizontal direction correlation detection circuit 23a and the vertical direction correlation detection circuit 23b;

Fig. 23 is an illustration for explaining the effect of the invention;

Fig. 24 is an illustration for explaining interpolation processing;

Fig. 25 is an illustration for explaining the effect of the invention;

Fig. 26 is an illustration for explaining the operations of a horizontal interpolation circuit 26 and a vertical interpolation circuit 27 in a sixth embodiment;

Fig. 27 is an illustration for explaining the operations of a horizontal interpolation circuit 29 and a vertical interpolation circuit 30 in a sixth embodiment;

Fig. 28 is an illustration for explaining the operations of a horizontal interpolation circuit 26 and a vertical interpolation circuit 27 in a seventh embodiment;

Fig. 29 is a schematic view showing a plurality of chroma detection areas previously set;

Fig. 30 is a graph showing the relationship between a chroma integrated value $C_k$ and a chromatic color/achromatic color judged value $R_k$; and

Fig. 31 is a block diagram showing the configuration of an eighth embodiment.

DETAILED DESCRIPTION OF THE PREFERRED EMBODIMENTS

[A] Description of First to Fourth Embodiments

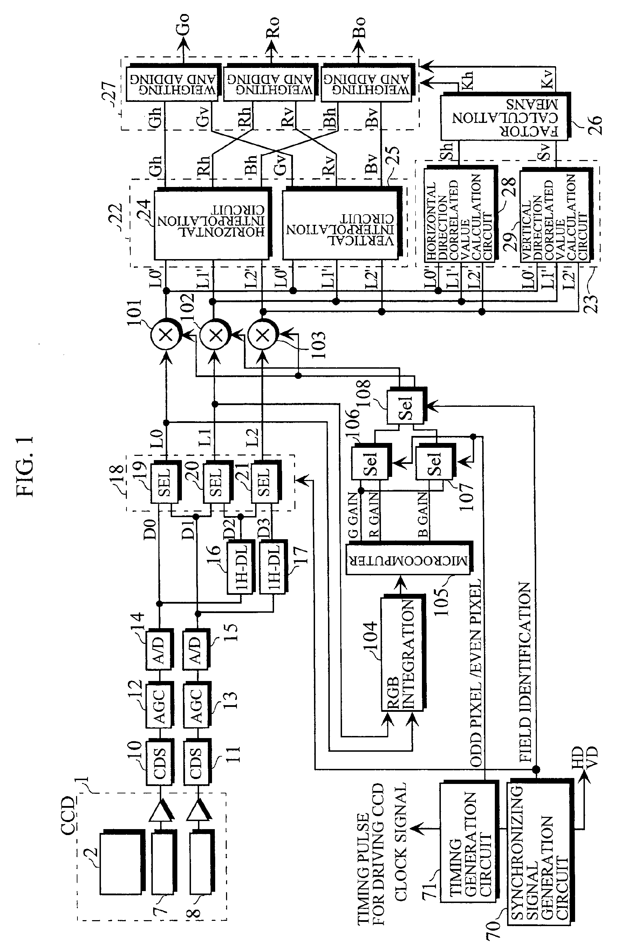

Referring now to Figs. 1 to 12, first to fourth embodiments of the present invention will be described.

[A-1] Description of Idea of the Present Invention

Also in the present invention, the direction of a correlation between a signal at a pixel to be processed on a CCD and a signal at pixels around the pixel to be processed is basically detected utilizing a correlation between images, to generate chrominance signals (RGB signals) by an interpolation processing method suitable for the detected direction of the correlation, as in the invention described in Japanese Patent (No. 2931520) referred to in "Description of the Prior Art".

The present invention differs from the prior art in that correlated values are calculated on the basis of signal output values from all pixels irrespective of the color level. In a case where the correlated values are calculated on the basis of the signal output values from all pixels, as described above, accurate correlated values cannot be calculated when the color level is high. Accordingly, the present invention is characterized in that correlated values are calculated using signals which have been subjected to gain control for each color filter.

That is, the present invention is characterized in that a gain control circuit for each color filter is provided in a stage preceding a circuit for calculating a correlated value (correlated value calculation means). Example of the gain control circuit is one for carrying out uniform gain control over the entire screen (calculating the most suitable gain by screen to control the gain) and one for dividing a screen into a plurality of areas and calculating the most suitable gain for each of the areas to control the gain.

In a case where the screen is divided into the plurality of areas, and the most suitable gain is calculated for each of the areas to control the gain, the correlated value calculation precision is improved with respect to a partially colored image, as compared with that in a case where the most suitable gain is calculated by screen to control the gain.

Generally in a color camera, a CCD signal is subjected to white balance processing on the basis of color information on the entire screen after color separation processing. In a case where used as a gain control circuit for enhancing the correlated value calculation precision is one for carrying out gain control by screen, if the gain control circuit is provided in a stage preceding interpolation means for color separation, to feed an output of the gain control circuit to the interpolation means and correlated value calculation means, white balance processing can be omitted after the color separation processing.

On the other hand, in a case where used as a gain control circuit for enhancing the correlated value calculation precision is one for dividing a screen into a plurality of areas and calculating the most suitable gain for each of the areas to control the gain, a signal obtained before the gain control is carried out must be inputted to interpolation means, whereby white balance processing must be performed after the color separation processing.

Four types of embodiments will be described:

(1) First embodiment; a case where an example of a gain control circuit for each color filter for enhancing the correlated value calculation precision is one for carrying out gain control for each color filter by screen, and an example of a CCD is one using a CCD for simultaneously reading out two lines
(2) Second embodiment; a case where an example of a gain control circuit for each color filter for enhancing the correlated value calculation precision is one for carrying out gain control for each color filter by screen, and an example of a CCD is a CCD for independently reading out all pixels (a progressive scan CCD)
(3) Third embodiment; a case where an example of a gain control circuit for each color filter for enhancing the correlated value calculation precision is one for dividing a screen into a plurality of areas to carry out gain control for each color filter by areas, and an example of a CCD is a CCD for simultaneously reading out two lines
(4) Fourth embodiment; a case where an example of a gain control circuit for each color filter for enhancing the correlated value calculation precision is one for dividing a screen into a plurality of areas to carry out gain control for each color filter by areas, and an example of a CCD is a CCD for independently reading out all pixels

[A-2] Description of First Embodiment

An embodiment in a case where used as a gain control circuit for each color filter for enhancing the correlated value calculation precision is one for carrying out gain control for each filter by screen, and used as a CCD (Charge Coupled Device) is a CCD for simultaneously reading out two lines will be described.

Fig. 1 illustrates the configuration of the CCD and a color separation circuit.

The CCD 1 is provided with an imaging unit 2 and horizontal transfer units 7 and 8.

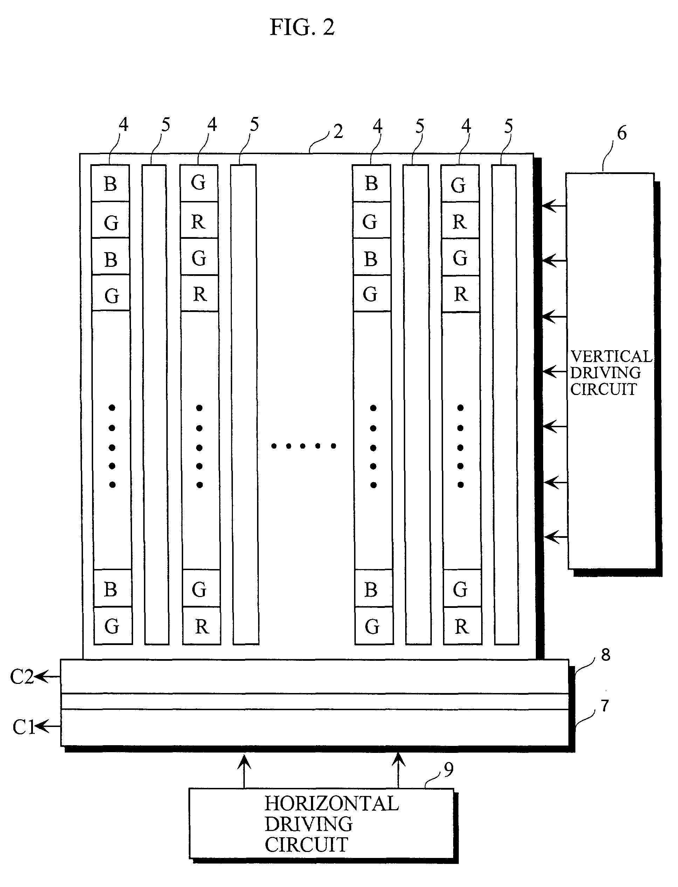

Fig. 2 illustrates the configuration of the CCD 1 and its driving circuit.

The imaging unit 2 is constituted by photodiodes 4 for performing photoelectric conversion and vertical transfer CCDs 5. Each of the photodiodes 4 comprises color filters in an arrangement, as indicated by R, G, and B. A vertical transfer CCD 5 is driven by a vertical driving circuit 6 outside the CCD.

The horizontal transfer unit has a dual channel structure using the first horizontal transfer CCD 7 and the second horizontal transfer CCD 8, so that signals corresponding to two lines are simultaneously obtained. The horizontal transfer CCDs 7 and 8 are driven by a horizontal driving circuit 9 outside the CCD 1.

Signals from the horizontal transfer units 7 and 8 are respectively converted into digital signals by A/D (Analog-to-Digital) conversion circuits 14 and 15 after being processed by CDSs (Correlation Double Sampling Circuits) 10 and 11 and AGCs (Automatic Gain Control Circuits) 12 and 13.

A signal D0 outputted from the one A/D conversion circuit 14 is fed to a first selection circuit 19 in a selection circuit 18, and is fed to a first 1H delay circuit 16. A signal D1 outputted from the other A/D conversion circuit 15 is fed to first and second selection circuits 19 and 20 in the selection circuit 18, and is fed to a second 1H delay circuit 17.

Each of the 1H delay circuits 16 and 17 is a memory capable of storing an input signal corresponding to 1H (one horizontal period). A signal which is delayed by 1H from the input signal is outputted from each of the 1H delay circuits 16 and 17. Signal writing and signal read-out to and from the 1H delay circuit are performed in synchronization with horizontal transfer by the CCD 1. Therefore, a timing generation circuit 71 and a synchronizing signal generation circuit 70 for controlling the operation of the CCD 1 are synchronously operated.

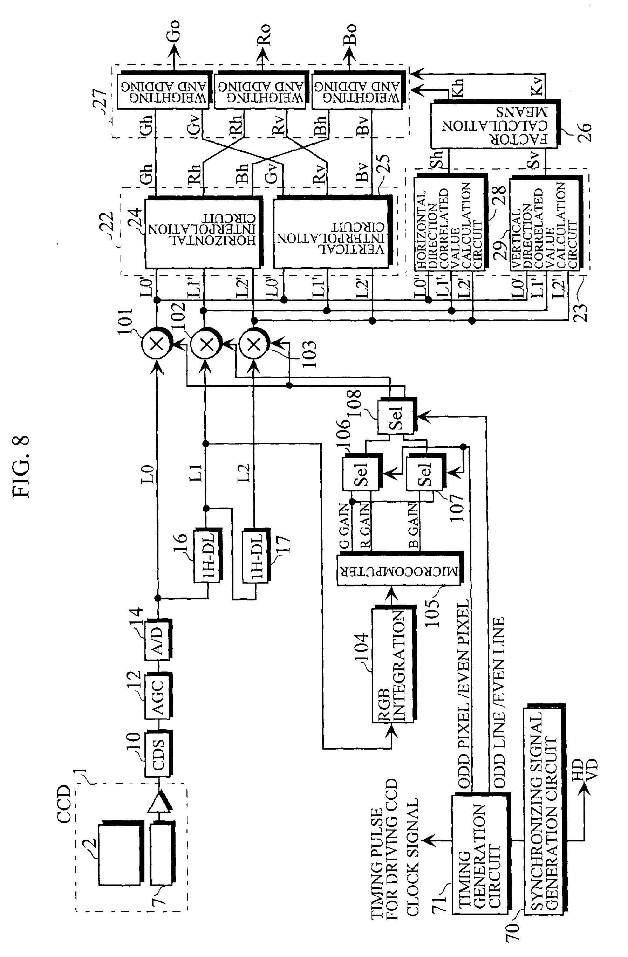

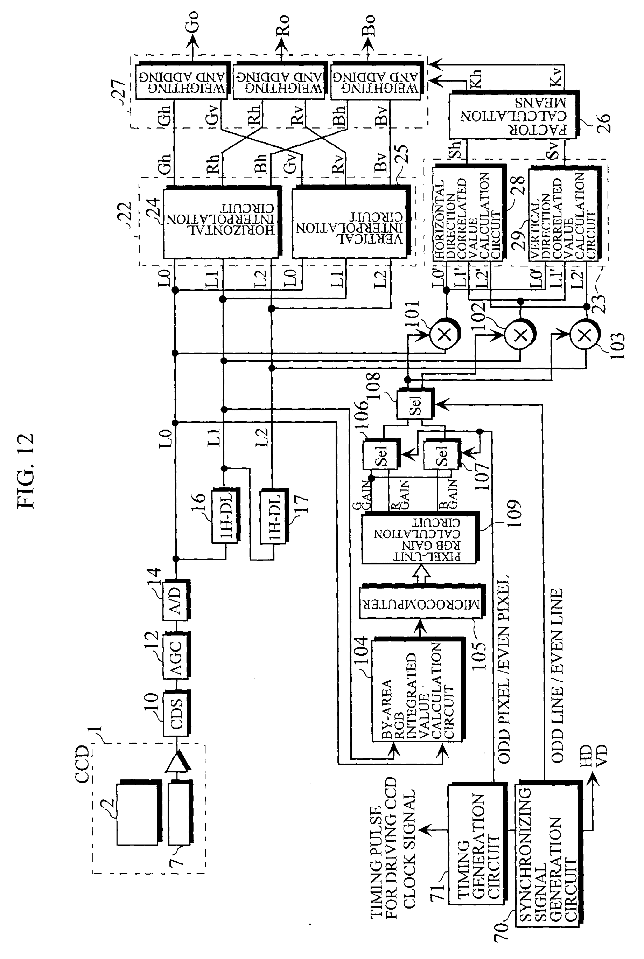

A timing pulse for driving the CCD, and an odd pixel/even pixel identification signal, and a clock signal are outputted from the timing generation circuit 71. HD (a horizontal synchronizing signal), VD (a vertical synchronizing signal), and a field identification signal are outputted from the synchronizing signal generation circuit 70. The operation of another circuit portion is controlled by an output signal from the synchronizing signal generation circuit 70. In the second embodiment and the fourth embodiment, an odd line/even line identification signal is outputted from the timing generation circuit 71, to control a selection circuit 108 in place of the filed identification signal outputted from the synchronizing signal generation circuit 70 (see Figs. 8 and 12).

An output D2 of the first 1H delay circuit 16 is fed to second and third selection circuits 20 and 21 in the selection circuit 18. An output D3 of the second 1H delay circuit 17 is fed to the third selection circuit 21 in the selection circuit 18.

The selection circuit 18 selects digital signals corresponding to three lines from digital signals corresponding to four lines depending on whether the type of field is an odd field or an even field, and outputs the selected digital signal. The selection circuits 19, 20, and 21 in the selection circuit 18 are controlled on the basis of the field identification signal representing the type of field outputted from the synchronizing signal generation circuit 70.

That is, the signals D1, D2, and D3 are selected in odd fields, and signals D0, D1, and D2 are selected in even fields. More specifically, when the field identification signal indicates an odd field (for example, a low-level signal), the first selection circuit 19 selects the signal D1, the second selection circuit 20 selects the signal D2, and the third selection circuit 21 selects the signal D3. Conversely, when the field identification signal indicates an even field (for example, a high-level signal), the first selection circuit 19 selects the signal D0, the second selection circuit 20 selects the signal D1, and the third selection circuit 21 selects the signal D2. In this way, signals L0, L1, and L2 corresponding to three lines, which correspond to the even and odd fields, are outputted from the selection circuit 18.

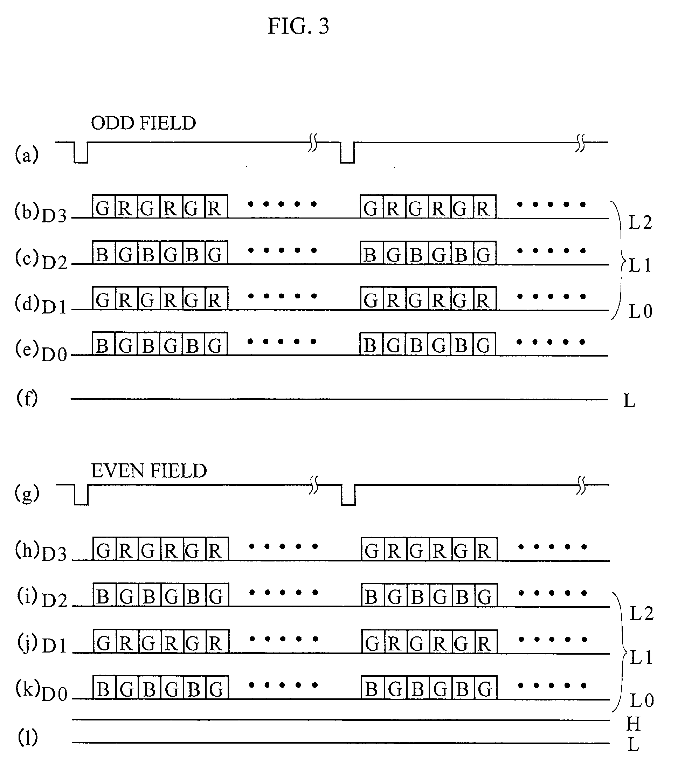

Fig. 3 illustrates the operation of the selection circuit 18.

(a) shown in Fig. 3 indicates the horizontal synchronizing signal (HD) in the odd field. (f) indicates the field identification signal, which is at a low level because it is in the odd field.

(b) to (e) shown in Fig. 3 respectively indicate the input signals D3, D2, D1, and D0 to the selection circuit 18 in the odd fields. When a field including an input image is the odd field, the signals D3, D2, and D1 are outputted from the selection circuit 18 as the signals L2, L1, and L0.

In the odd field, when a signal on the fourth line is inputted as D0, D3 corresponds to the first line, D2 corresponds to the second line, D1 corresponds to the third line, and D0 corresponds to the fourth line, so that the signals on the first, second, and third lines are selected. Then, D3 corresponds to the third line, D2 corresponds to the fourth line, D1 corresponds to the fifth line, and D0 corresponds to the sixth line, so that the signals on the third, fourth, and fifth lines are selected.

(g) shown in Fig. 3 indicates the horizontal synchronizing signal (HD) in the even field. (1) indicates the field identification signal, which is at a high level because it is in the even field.

(h) to (k) shown in Fig. 3 respectively indicate the input signals D3, D2, D1, and D0 to the selection circuit 18 in the even fields. When a field including an input image is the even field, the signals D2, D1, and D0 are outputted from the selection circuit 18 as the signals L2, L1, and L0.

In the even field, when a signal on the fourth line is inputted as D0, D3 corresponds to the first line, D2 corresponds to the second line, D1 corresponds to the third line, and D0 corresponds to the fourth line, so that the signals on the second, third, and fourth lines are selected. Then, D3 corresponds to the third line, D2 corresponds to the fourth line, D1 corresponds to the fifth line, and D0 corresponds to the sixth line, so that the signals on the fourth, fifth, and sixth lines are selected.

The outputs L0, L1, and L2 of the selection circuit 18 are respectively fed to multipliers 101, 102, and 103. Each of the multipliers 101, 102, and 103, together with an RGB integration circuit 104, a microcomputer 105, and three selection circuits 106, 107, and 108, constitutes a gain control circuit for carrying out gain control for each color filter. In this example, an example of the gain control circuit is one for carrying out gain control for each color filter by screen on the basis of color information obtained from the entire screen. Accordingly, the gain control circuit is also used as a white balance processing circuit.

Specifically, the outputs L0, L1, and L2 of the selection circuit 18 are subjected to gain control for each color filter by screen by the gain control circuit. That is, gains are respectively applied to the outputs L0, L1, and L2 of the selection circuit 18 by the multipliers 101, 102, and 103 such that the respective integrated values of R, G, and B signals in one screen are constant. The details of the gain control circuit will be described later. Here, the digital multipliers 101, 102, and 103 are used as multipliers for carrying out gain control (white balance processing) for each color filter by screen. When the AGC circuits 12 and 13 can carry out gain control for each of the R, G, and B signals, however, white balance processing can be also performed utilizing the AGC circuits 12 and 13.

Outputs L0', L1', and L2' of the respective multipliers 101, 102, and 103 are fed to interpolation processing means 22 and correlated value calculation means 23.

The interpolation processing means 22 is provided with a horizontal interpolation circuit 24 and a vertical interpolation circuit 25. The horizontal interpolation circuit 24 performs interpolation processing suitable for a case where there is a strong correlation in the horizontal direction on the basis of output signals, from the CCD 1, corresponding to three lines, to generate three chrominance signals Gh, Rh, and Bh for respective pixels. The vertical interpolation circuit 25 performs interpolation processing suitable for a case where there is a strong correlation in the vertical direction on the basis of output signals, from the CCD 1, corresponding to three lines, to generate three chrominance signals Gv, Rv, and Bv for respective pixels.

The case where there is a strong correlation in the horizontal direction means a case where there is a strong correlation in the horizontal direction, but there is little correlation in the vertical direction, as in a fine horizontally-striped image. On the other hand, the case where there is a strong correlation in the vertical direction means a case where there is a strong correlation in the vertical direction, but there is little correlation in the horizontal direction, as in a fine vertically-striped image. The details of each of the interpolation circuits 24 and 25 will be described later.

The correlated value calculation means 23 is provided with a horizontal direction correlated value calculation circuit 28 and a vertical direction correlated value calculation circuit 29. The horizontal direction correlated value calculation circuit 28 calculates a correlated value in the horizontal direction (hereinafter referred to as a horizontal direction correlated value) Sh on the basis of a differential signal in the horizontal direction (e.g., the absolute value of a secondary differential signal in the horizontal direction). The vertical direction correlated value calculation circuit 29 calculates a correlated value in the vertical direction (hereinafter referred to as a vertical direction correlated value) Sv on the basis of a differential signal in the vertical direction (e.g., the absolute value of a secondary differential signal in the vertical direction). The details of each of the correlated value calculation circuits 28 and 29 will be described later.

The horizontal direction correlated value Sh and the vertical direction correlated value Sv are fed to factor calculation means 26. In the factor calculation means 26, a weighting factor Kh corresponding to the horizontal direction and a weighting factor Kv corresponding to the vertical direction are respectively calculated on the basis of both the correlated values Sh and Sv. The weighting factors Kh and Kv are fed to weighting and addition means 27.

The chrominance signals Gh, Rh, and Bh outputted from the horizontal interpolation circuit 24 and the chrominance signals Gv, Rv, and Bv outputted from the vertical interpolation circuit 25 are fed to the weighting and addition means 27. The weighting and addition means 27 multiplies the chrominance signals Gh, Rh, and Bh by the factor Kh, and multiples the chrominance signals Gv, Rv, and Bv by the factor Kv, adds the respective results of the multiplication of the signals in the same colors (Gh and Gv, Rh and Rv, and Bh and Bv) by the factors, and outputs the results of the addition as final chrominance signals Go, Ro, and Bo.

Specifically, interpolation processing for separating the chrominance signals is controlled on the basis of the correlated values in the horizontal direction and the vertical direction.

[A-2-1] Description of the gain control circuit (white balance processing circuit) for each color filter

The RGB integration circuit 104 calculates an integrated value for each of the R, G, and B signals for each field on the basis of the output signals L0 and L1 of the selection circuit 18. The integrated value for each of the R, G, and B signals which is calculated by the RGB integration circuit 104 is fed to the microcomputer 105.

The microcomputer 105 calculates gains respectively corresponding to the R, G, and B signals and outputs the calculated gains, for each field, on the basis of the integrated value for each of the R, G, and B signals, which is fed from the RGB integration circuit 104, such that the integrated value for each of the R, G, and B signals is a constant value.

The microcomputer 105 may calculate an integrated value for each of the R, G, and B signals which corresponds to one field on the basis of the R, G, and B signals most newly fed from the RGB integration circuit 104 and the integrated value for each of the R, G, and B signals which is fed in the past from the RGB integration circuit 104, and may calculate gains respectively corresponding to the R, G, and B signals and output the calculated gains for each field such that the integrated value for each of the calculated R, G, and B signals is a constant value.

Meanwhile, in the first embodiment using the CCD for simultaneously reading out two lines as the CCD 1, it is determined which of the R, G, and B signals is each of the signals L0, L1, and L2 outputted from the selection circuit 18 depending on whether the type of field is an odd field or an even field and whether a pixel corresponding to each of the signals L0, L1, and L2 is an odd-numbered pixel or an even-numbered pixel on a horizontal line.

Specifically, as shown in Fig. 3, when the type of field is an odd field, and the pixel corresponding to each of the signals L0, L1, and L2 is an odd-numbered pixel on the horizontal line, the signals L0 and L2 are G signals, and the signal L1 is a B signal. When the type of field is an even field, and the pixel corresponding to each of the signals L0, L1, and L2 is an even-numbered pixel on the horizontal line, the signals L0 and L2 are R signals, and the signal L1 is a G signal.

When the type of field is an even field, and the pixel corresponding to each of the signals L0, L1, and L2 is an odd-numbered pixel on the horizontal line, the signals L0 and L2 are B signals, and the signal L1 is a G signal. When the type of field is an even field, and the pixel corresponding to each of the signals L0, L1, and L2 is an even-numbered pixel on the horizontal line, the signals L0 and L2 are G signals, and the signal L1 is an R signal.

The three selection circuits 106, 107, and 108 select and control, such that the R gain, the G gain, and the B gain are respectively fed to the R signal corresponding to an R pixel, the G signal corresponding to a G pixel, and the B signal corresponding to a B pixel, the inputted gains on the basis of the field identification signal for judging whether the type of field is an odd field or an even field and the odd pixel/even pixel identification signal for judging whether a pixel corresponding to each of the signals L0, L1, and L2 is an odd-numbered pixel or an even-numbered pixel on the horizontal line.

Specifically, the gain (G gain) corresponding to the G signal outputted from the microcomputer 105 is fed to the selection circuit 106 and the selection circuit 107. The gain (R gain) corresponding to the R signal outputted from the microcomputer 105 is fed to the selection circuit 106. The gain (B gain) corresponding to the B signal outputted from the microcomputer 105 is fed to the selection circuit 107.

The odd pixel/even pixel identification signal indicating whether each of the signals L0, L1, and L2 outputted from the selection circuit 18 corresponds to an odd-numbered pixel or an even-numbered pixel is inputted from the timing generation circuit 71 to each of the selection circuits 106 and 107.

When the odd pixel/even pixel identification signal indicates that the signal corresponds to an odd-numbered pixel, the selection circuit 106 selects the G gain, and the selection circuit 107 selects the B gain. When the odd pixel/even pixel identification signal indicates that the signal corresponds to an even-numbered pixel, the selection circuit 106 selects the R gain, and the selection circuit 107 selects the G gain. Outputs of both the selection circuits 106 and 107 are fed to the selection circuit 108. The field identification signal representing the type of field is inputted from the synchronizing signal generation circuit 70 to the selection circuit 108.

The selection circuit 108 feeds, when the field identification signal represents an odd field, the output of the selection circuit 108 to the multiplier 101 corresponding to the signal L0 and the multiplier 103 corresponding to the signal L2, and feeds the output of the selection circuit 107 to the multiplier 102 corresponding to the signal L1.

When the field is an odd field, and the pixel corresponding to each of the signals L0, L1, and L2 is an odd-numbered pixel, therefore, the signal L0 and the signal L2 are multiplexed by the G gain, and the signal L1 is multiplexed by the B gain. When the field is an odd field, and the pixel corresponding to each of the signals L0, L1, and L2 is an even-numbered pixel, the signal L0 and the signal L2 are multiplexed by the R gain, and the signal L1 is multiplexed by the G gain.

When the field identification signal represents an even field, the selection circuit 108 feeds the output of the selection circuit 107 to the multiplier 101 corresponding to the signal L0 and the multiplier 103 corresponding to the signal L2, and feeds the output of the selection circuit 106 to the multiplier 102 corresponding to the signal L1.

When the type of field is an even field, and the pixel corresponding to each of the signals L0, L1, and L2 is an odd-numbered pixel, therefore, the signal L0 and the signal L2 are multiplexed by the B gain, and the signal L1 is multiplexed by the G gain. When the type of field is an even field, and the pixel corresponding to each of the signals L0, L1, and L2 is an even-numbered pixel, the signal L0 and the signal L2 are multiplexed by the G gain, and the signal L1 is multiplexed by the R gain.

Consequently, each of the signals L0, L1, and L2 outputted from the selection circuit 18 is subjected to gain control processing (white balance processing) for each color filter.

[A-2-2] Description of the horizontal interpolation circuit 24 and the vertical interpolation circuit 25

In the present embodiment, chrominance signals in three colors corresponding to one pixel at the center of a block composed of 3 by 3 pixels are produced on the basis of signals from the nine pixels in the block.

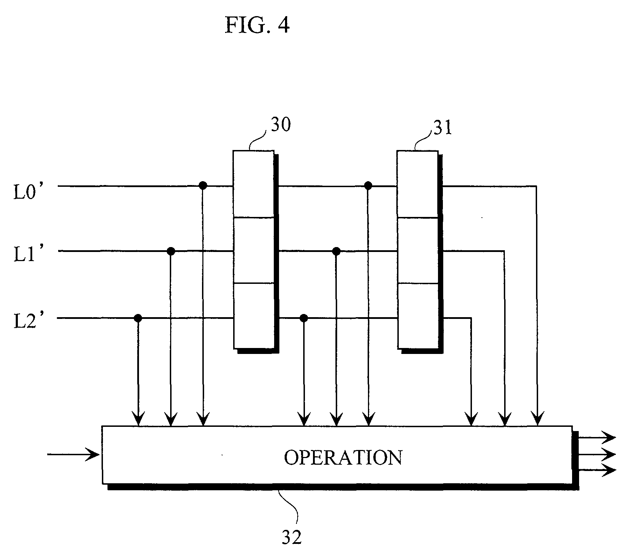

Each of the horizontal interpolation circuit 24 and the vertical interpolation circuit 25 is basically constituted by a digital processing circuit composed of a block as shown in Fig. 4. Reference numerals 30 and 31 shown in Fig. 4 denote delay means comprising delay time equal to time required for one pixel to be transmitted, and reference numeral 32 denotes operation means.

That is, the signals L0', L1', and L2' outputted from the multipliers 101, 102, and 103 are inputted to the delay means 30 and 31, whereby the signals corresponding to the nine pixels are simultaneously fed to the operation means 32. Interpolation processing is performed by the operation means 32. Generally after color separation processing, white balance processing is performed. In the present embodiment, however, gain control (white balance processing) for each color filter by screen is carried out in a stage preceding the interpolation means 22 in order to improve the precision of correlated values. Accordingly, no white balance processing is performed after the color separation processing.

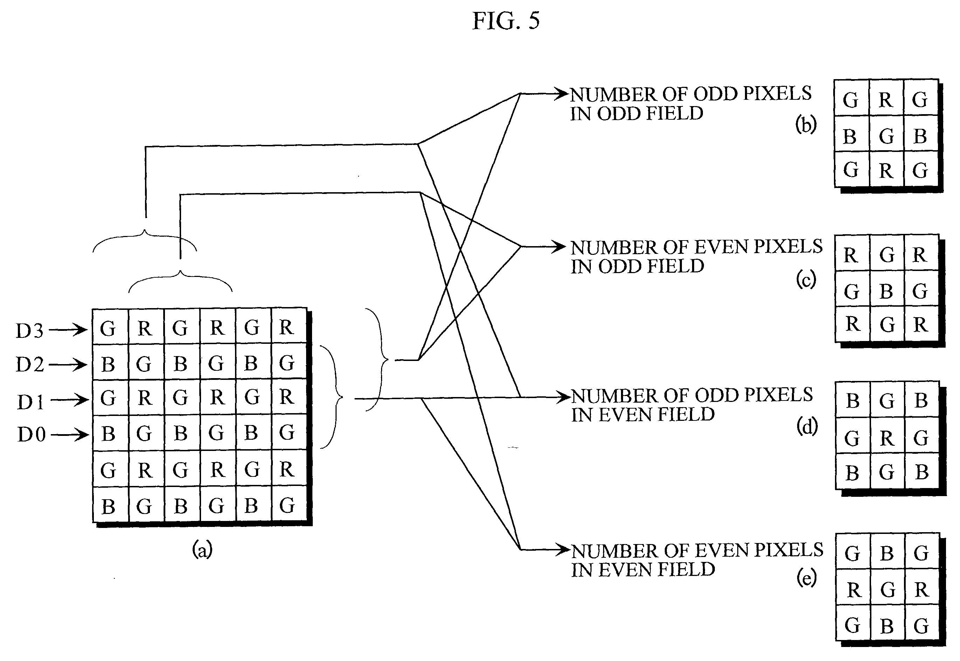

Fig. 5 is a diagram showing the relationship between an arrangement of pixels on the CCD 1 and the selected pixels.

At the time of odd fields, line signals D1, D2, and D3 are selected. Accordingly, a block composed of 3 by 3 pixels which is subjected to odd-numbered processing is as shown in Fig. 5 (b), and a block which is subjected to even-numbered processing is as shown in Fig. 5 (c).

On the other hand, at the time of even fields, line signals D0, D1, and D2 are selected. Accordingly, a block which is subjected to odd-numbered processing is as shown in Fig. 5 (d), and a block which is subjected to even-numbered processing is as shown in Fig. 5 (e).

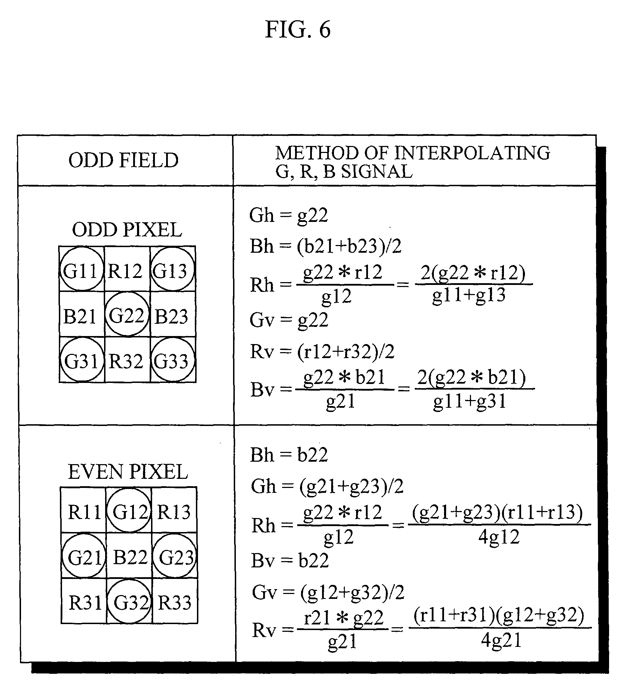

Fig. 6 illustrates an operation expression used by the horizontal interpolation circuit 24 and the vertical interpolation circuit 25 when a block to be processed is an odd-numbered block or an even-numbered block in an odd field.

In the following description, gain control processing for each color filter by screen shall be referred to as white balance processing. $r_{ik}$ represents a signal value after the white balance processing for a pixel $R_{ik}$, $g_{ik}$ represents a signal value after the white balance processing for a pixel $G_{ik}$, and $b_{ik}$ represents a signal value after the white balance processing for a pixel $B_{ik}$.

When the block to be processed is an odd-numbered block in the odd field, Gh, Bh, and Rh for a center pixel (a pixel to be processed) $G_{22}$ are calculated in the following manner in the horizontal interpolation circuit 24.

That is, a signal $g_{22}$ after the white balance processing at the pixel to be processed $G_{22}$ is used as Gh for the pixel to be processed $G_{22}$. Bh for the pixel to be processed $G_{22}$ is found by calculating the average of signals $b_{21}$ and $b_{23}$ after the white balance processing at two left and right pixels $B_{21}$ and $B_{23}$ with the pixel to be processed $G_{22}$ interposed therebetween (utilizing a correlation in the horizontal direction). Rh for the pixel to be processed $G_{22}$ becomes slightly complicated. That is, $g_{12}$ which is a G signal at a pixel $R_{12}$ is calculated as the average of $g_{11}$ and $g_{13}$ (i.e., utilizing a correlation in the horizontal direction). Rh is found from the ratio of $g_{12}$ found by the calculation to $g_{22}$ actually obtained and $r_{12}$.

The reason for this is that the ratio of the g signal and the r signal or the b signal is approximately equal between the adjacent pixels because local conversion of a chrominance signal is smaller than conversion of luminance. That is, $r_{22}$ (= Rh) is found, assuming that $g_{12} : r_{12} = g_{22} : r_{22}$.

When the block to be processed is an odd-numbered block in the odd field, Gv, Bv, and Rv for the center pixel $G_{22}$ are calculated in the following manner in the vertical interpolation circuit 25.

That is, the signal $g_{22}$ after the white balance processing at the pixel to be processed $G_{22}$ is used as Gv for the pixel to be processed $G_{22}$. Rv for the pixel to be processed $G_{22}$ is found by calculating the average of signals $r_{12}$ and $r_{32}$ after the white balance processing at two upper and lower pixels $R_{12}$ and $R_{32}$ with the pixel to be processed $G_{22}$ interposed therebetween (utilizing a correlation in the vertical direction). Bv for the pixel to be processed $G_{22}$ is found, similarly to Rh, described above. That is, $g_{21}$ which is a G signal at a pixel $B_{21}$ is calculated as the average of $g_{11}$ and $g_{31}$ (utilizing a correlation in the vertical direction). Bv is calculated from the ratio of $g_{21}$ to $g_{22}$ found by the calculation and $b_{21}$.

When the block to be processed is an even-numbered block in the odd field, Gh, Bh, and Rh for a center pixel $B_{22}$ are calculated in the following manner in the horizontal interpolation circuit 24.

That is, a signal $b_{22}$ after the white balance processing at the pixel to be processed $B_{22}$ is used as Bh for the pixel to be processed $B_{22}$. Gh for the pixel to be processed $B_{22}$ is found by calculating the average of $g_{21}$ and $g_{23}$. With respect to Rh for the pixel to be processed $B_{22}$, the average of $r_{11}$ and $r_{13}$ is first found to obtain $r_{12}$. Rh is found by the ratio of Gh (= $g_{22}$) to $g_{12}$ and $r_{12}$.

When the block to be processed is an even-numbered block in the odd field, Gv, Bv, and Rv for the center pixel $B_{22}$ are calculated in the following manner in the vertical interpolation circuit 25.

That is, the signal b22 is used as Bv for the pixel to be processed B22. Gv for the pixel to be processed B22 is found by calculating the average of g12 and g32. With respect to Rv for the pixel to be processed B22, the average of r11 and r31 is first found to obtain r21. Rv is found by the ratio of Gh (= g22) to g21 and r21.

Even when the block to be processed is a block in the even field, the same processing as the processing shown in Fig. 6 is performed, thereby making it possible to obtain signals Rh, Gh, Bh, Rv, Gv, and Bv. That is, when the block to be processed is an odd-numbered block in the even field, an arrangement of pixels composing the block is obtained by replacing R and B in a pixel arrangement in a case where the block to be processed is an even-numbered block in the odd field, as apparent from Figs. 5 (c) and 5 (d). In an operation expression used when the block to be processed is an even-numbered block in the odd field, therefore, r and b may be replaced with each other.

When the block to be processed is an even-numbered block in the even field, an arrangement of pixels composing the block is obtained by replacing R and B in a pixel arrangement in a case where the block to be processed is an odd-numbered block in the odd field, as apparent from Figs. 5 (b) and 5 (e) . In an operation expression used when the block to be processed is an odd-numbered block in the odd field, therefore, r and b may be replaced with each other.

[A-2-3] Description of a horizontal direction correlated value calculation circuit 28 and a vertical direction correlated value calculation circuit 29

Each of the horizontal direction correlated value calculation circuit 28 and the vertical direction correlated value calculation circuit 29 is basically constituted by a digital processing circuit composed of a block as shown in Fig. 4. Reference numerals 30 and 31 shown in Fig. 4 denote delay means comprising delay time equal to time required for one pixel to be transmitted, and reference numeral 32 denotes operation means.

That is, the signals L0', L1', and L2' corresponding to different lines in the CCD 1 are inputted to the delay means 30 and 31, whereby signals corresponding to nine pixels are simultaneously fed to the operation means 32. Correlated value calculation processing is performed by an operation in the operation means 32.

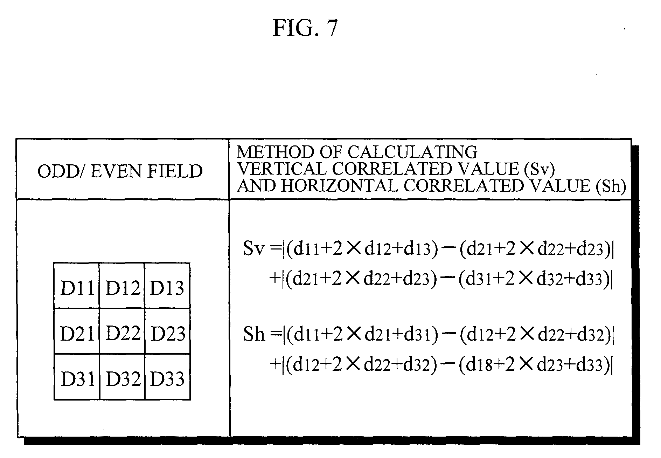

Fig. 7 illustrates an operation expression used by the horizontal direction correlated value calculation circuit 28 and the vertical direction correlated value calculation circuit 29.

Specifically, the correlated value calculation circuits 28 and 29 respectively calculate the correlated values Sh and Sv using signals $d_{11}$ to $d_{33}$ after the white balance processing at all pixels $D_{11}$ to $D_{33}$ in a block composed of 3 by 3 pixels (corresponding to a block composed of M pixels by N pixels in the claims). The operation expression used by the horizontal direction correlated value calculation circuit 28 is the same irrespective of the pattern of the pixels composing the block to be processed. Similarly, the operation expression used by the vertical direction correlated value calculation circuit 29 is the same irrespective of the pattern of the pixels composing the block to be processed.

The smaller the horizontal direction correlated value Sv is, the stronger the correlation in the horizontal direction is. Similarly, the smaller the vertical direction correlated value Sv is, the stronger the correlation in the vertical direction is.

[A-2-4] Description of the factor calculation means 26

The factor calculation means 26 calculates the factors Kh and Kv in the horizontal direction and the vertical direction from the outputs Sh and Sv of the correlated value calculation means 23.

The factors Kh and Kv are found by the following expression (1). A relationship of Kh + Kv = 1 holds between Kh and Kv.

$$Kh = Sv / (Sh + Sv)$$
$$Kv = Sh / (Sh + Sv)$$

$$\cdots \quad (1)$$

Consequently, the factor Kh in the horizontal direction becomes large when a correlation in the horizontal direction is stronger than a correlation in the vertical direction (when Sh is smaller than Sv) . The factor Kv in the vertical direction becomes large when the correlation in the vertical direction is stronger than the correlation in the horizontal direction (when Sv is smaller than Sh).

As described in the foregoing, signal components of R, G, and B signals corresponding to one pixel in the CCD are calculated utilizing outputs from pixels (nine pixels in all) around the one pixel. At this time, however, an operation is executed using a processing method suitable for a case where there is a strong correlation in the horizontal direction and a processing method suitable for a case where there is a strong correlation in the vertical direction. The results of the operation by the two methods are weighted and added depending on which of the horizontal correlation and the vertical correlation in the vicinity of the pixel is stronger.

[A-3] Description of Second Embodiment

Description is made of an embodiment in a case where used as a gain control circuit for each color filter for enhancing the correlated value calculation precision is one for carrying out gain control for each filter by screen, and used as a CCD is a CCD for independently reading out all pixels.

Fig. 8 illustrates the configuration of the CCD and a color separation circuit. In Fig. 8, components corresponding to those shown in Fig. 1 are assigned the same reference numerals.

The CCD 1 is a CCD for independently reading out all lines. Accordingly, only one horizontal transfer unit 7 is provided. Correspondingly, there are provided only respective one CDS 10, AGC 12, and A/D conversion circuit 14.

A signal L0 outputted from the A/D conversion circuit 14 is fed to a multiplier 101, and is fed to a first 1H delay circuit 16. An output signal L1 of the first 1H delay circuit 16 (a signal which is delayed by one line from L0) is fed to a multiplier 102, and is fed to a second 1H delay circuit 17. An output signal L2 of the second 1H delay circuit 17 (a signal which is delayed by two lines from L0) is fed to a multiplier 103. That is, signals corresponding to three lines are respectively fed to multipliers 101, 102, and 103.

That is, when a signal on the third line is inputted as L0 in each frame, L1 corresponds to the second line, and L2 corresponds to the first line. Then, L0 corresponds to the fourth line, L1 corresponds to the third line, and L2 corresponds to the second line. In the present embodiment, all signals are read out for each frame, so that odd fields and even fields are not distinguished.

When the signal L2 (or L0) is a signal on an odd line and corresponding to an odd-numbered pixel on the line, therefore, an arrangement of pixels in a block to be processed composed of 3 by 3 pixels is as shown in Fig. 5 (b). Further, when the signal L2 (or L0) is a signal on an odd line and corresponding to an even-numbered pixel on the line, an arrangement of pixels in the block to be processed composed of 3 by 3 pixels is as shown in Fig. 5 (c) .

When the signal L2 (or L0) is a signal on an even line and corresponding to an odd-numbered pixel on the line, therefore, an arrangement of pixels in the block to be processed composed of 3 by 3 pixels is as shown in Fig. 5 (d). Further, when the signal L2 (or L0) is a signal on an even line and corresponding to an even-numbered pixel on the line, an arrangement of pixels in the block to be processed composed of 3 by 3 pixels is as shown in Fig. 5 (e) .

Furthermore, an RGB integration circuit 104 in a gain control circuit (a white balance processing circuit) for carrying out gain control for each color filter by screen calculates an integrated value for each of R, G, and B signals for each frame on the basis of the signal L1. The integrated value for each of the R, G, and B signals which is calculated by the RGB integration circuit 104 is fed to a microcomputer 105.

The microcomputer 105 calculates gains respectively corresponding to the R, G, and B signals and outputs the calculated gains for each frame, on the basis of the integrated value for each of the R, G, and B signals corresponding to one frame which is fed from the RGB integration circuit 104, such that the integrated value for each of the R, G, and B signals is a constant value.

Furthermore, the operations of the selection circuits 106 and 107 are the same as the operations of the selection circuits 106 and 107 in the first embodiment except that an odd line/even line identification signal for judging whether the signal L2 (or L0) is a signal corresponding to an odd-numbered line or a signal corresponding to an even-numbered line in place of inputting a field identification signal as a control signal to a selection circuit 108.

When the odd line/even line identification signal indicates that the signal is a signal corresponding to an odd-numbered line, the operation of the selection circuit 108 is the same as the operation in a case where the field identification signal indicates that the signal is a signal corresponding to an odd field in the first embodiment. When the odd line/even line identification signal indicates that the signal is a signal corresponding to an even-numbered line, the operation of the selection circuit 108 is the same as the operation in a case where the field identification signal is an even field in the first embodiment.

Also in the present embodiment, examples of the type of block processed by a horizontal interpolation circuit 24 and a vertical interpolation circuit 25 are four types (Figs. 5(b) to 5(e)), as in the first embodiment, and the contents of processing corresponding to the block of each of the types are the same as those in the first embodiment. The contents of processing by a horizontal direction correlated value calculation circuit 28 and a vertical direction correlated value calculation circuit 29 are the same as the contents of processing by the horizontal direction correlated value calculation circuit 28 and the vertical direction correlated value calculation circuit 29 in the first embodiment.

[A-4] Description of Third Embodiment

Description is made of an embodiment in a case where used as a gain control circuit for each color filter for enhancing the correlated value calculation precision is one for dividing a screen into a plurality of areas and carrying out gain control for each color filter by areas, and used as a CCD is a CCD for simultaneously reading out two lines.

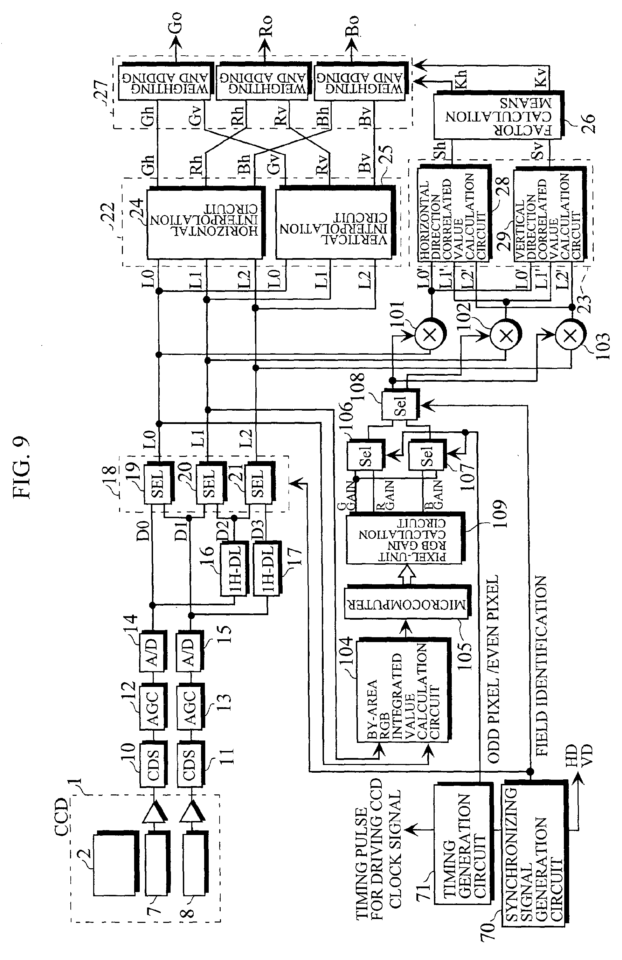

Fig. 9 illustrates the configuration of the CCD and a color separation circuit.

In Fig. 9, components corresponding to those shown in Fig. 1 are assigned the same reference numerals.

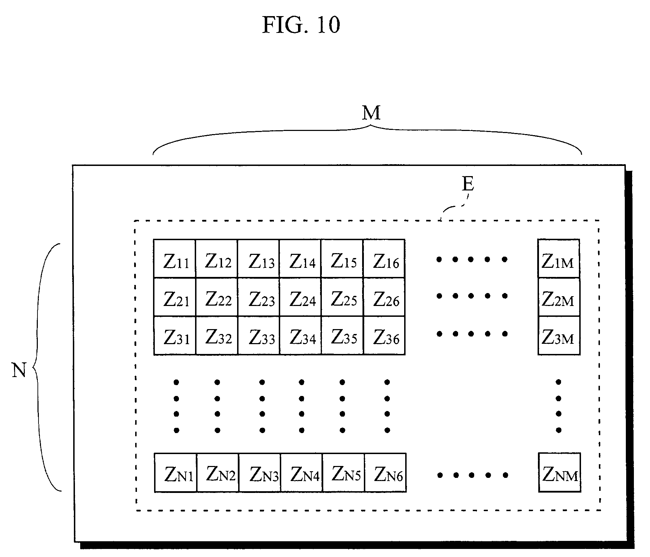

The third embodiment differs from the first embodiment in that a screen is divided into a plurality of areas, to carry out gain control for each color filter by areas, as shown in Fig. 10, in the third embodiment.

In the third embodiment, gain control for each color filter is carried out not by screen but by areas obtained by dividing a screen. Accordingly, a signal inputted to interpolation means 22 cannot be directly subjected to gain control.

Each of signals L0, L1, and L2 outputted from a selection circuit 18 is divided into two parts. One of the parts is inputted to the interpolation means 22 as it is, and the other part is inputted to correlated value calculation means 23 through multipliers 101, 102, and 103. White balance processing is performed in a stage succeeding the color separation circuit.

Description is now made of gain control for each color filter which is carried out in a stage preceding the correlated value calculation means 23.

As shown in Fig. 10, M by N integrated value calculation areas $Z_{11}$ and $Z_{NM}$ are set in an effective image region E in one field.

A by-area RGB integrated value calculation circuit 104 calculates an integrated value for each of R, G, and B signals for each of the integrated value calculation areas $Z_{11}$ and $Z_{NM}$ by frame. The integrated value for each of the R, G, and B signals for each of the integrated value calculation areas $Z_{11}$ to $Z_{NM}$ which is calculated by the by-area RGB integrated value calculation circuit 104 is fed to a microcomputer 105.

The microcomputer 105 calculates typical gain values respectively corresponding to the R, G, and B signals for each of the integrated value calculation areas $Z_{11}$ to $Z_{NM}$ by field, and outputs the calculated typical gain values to a pixel-unit RGB gain calculation circuit 109, on the basis of the integrated value for each of the R, G, and B signals for each of the integrated value calculation areas $Z_{11}$ to $Z_{NM}$ which is fed from the by-area RGB integrated value calculation circuit 104, such that the integrated value for each of the R, G, and B signals is a constant value for each of the integrated value calculation areas $Z_{11}$ to $Z_{NM}$.

The pixel-unit RGB gain calculation circuit 109 calculates R, G, and B gains for a pixel corresponding to the signal L1 outputted from the selection circuit 18 and outputs the calculated gains to the selection circuits 106 and 107 on the basis of the typical gain values respectively corresponding to the R, G, and B signals for each of the integrated value calculation areas $Z_{11}$ to $Z_{NM}$.

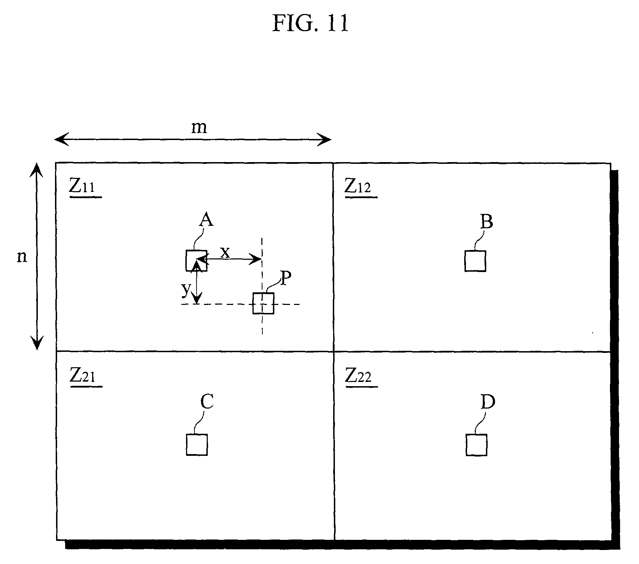

Description is made of a method of calculating the R, G, and B gains for the pixel corresponding to the signal L1 outputted from the selection circuit 18 using Fig. 11.

All a method of calculating the R gain for the pixel corresponding to the signal L1, a method of calculating the G gain for the pixel corresponding to the signal L1, and a method of calculating the B gain for the pixel corresponding to the signal L1 are the same. Accordingly, the method of calculating the R gain for the pixel corresponding to the signal L1 will be described.

In Fig. 11, only the four integrated value calculation areas $Z_{11}$, $Z_{12}$, $Z_{21}$, and $Z_{22}$ are illustrated for convenience of illustration. The typical R gain value calculated with respect to the area $Z_{11}$ is taken as an R gain for the pixel A at the center of the area $Z_{11}$, which shall be denoted by a. Similarly, the typical R gain value calculated with respect to the area $Z_{12}$ is taken as an R gain for the pixel B at the center of the area $Z_{12}$, which shall be denoted by b. Similarly, the typical R gain value calculated with respect to the area $Z_{21}$ is taken as an R gain for the pixel C at the center of the area $Z_{21}$, which shall be denoted by c. Similarly, the typical R gain value calculated with respect to the area $Z_{22}$ is taken as an R gain for the pixel D at the center of the area $Z_{22}$, which is denoted by d.

The R gains for the pixels A, B, C, and D at the centers of the areas are a, b, c, and d. Description is made of a method of finding the R gain in a case where the pixel corresponding to the signal L1 is the pixel other than the pixels A, B, C, and D at the centers of the areas.

It is assumed that the pixel corresponding to the signal L1 is a pixel P at a position spaced x apart rightward from the pixel A and spaced y apart downward therefrom in the area $Z_{11}$, for example. The R gain p for the pixel P is found by linearly interpolating the R gains (a, b, c, d) for the respective center pixels in the four areas $Z_{11}$, $Z_{12}$, $Z_{21}$, and $Z_{22}$ around the pixel P. That is, the R gain for the pixel P is found by the following expression (2) :

$$p = \frac{\left\{ \dfrac{a \times (n - y) + c \times y}{n} \times (m - x) \right\} + \left\{ \dfrac{b \times (n - y) + d \times y}{n} \times x \right\}}{m} \qquad \cdots \quad (2)$$

The operations of the selection circuits 106, 107, and 108 are the same as the operations of the units 106, 107, and 108 described in the first embodiment. Consequently, the signals L0, L1, and L2 are subjected to gain control for each color filter on the basis of the R gain, the G gain, and B gain for the pixel corresponding to the signal L0.

The contents of processing by a horizontal direction correlated value calculation circuit 28 and a vertical direction correlated value calculation circuit 29 are the same as the contents of processing by the horizontal direction correlated value calculation circuit 28 and the vertical direction correlated value calculation circuit 29 in the first embodiment.

The third embodiment differs from the first embodiment in that the signals inputted to a horizontal interpolation circuit 24 and a vertical interpolation circuit 25 are not signals L0', L1', and L2' which have been subjected to white balance processing on the entire screen but the signals L0, L1, and L2 outputted from the selection circuit 18. However, a method of processing the horizontal interpolation circuit 24 and the vertical interpolation circuit 25 is the same as the method of processing the horizontal interpolation circuit 24 and the vertical interpolation circuit 25 in the first embodiment.

[A-5] Description of Fourth Embodiment

Description is made of an embodiment in a case where used as a gain control circuit for each color filter for enhancing the correlated value calculation precision is one for dividing a screen into a plurality of areas and carrying out gain control for each color filter by areas, and used as a CCD is a CCD for independently reading out all pixels.

Fig. 12 illustrates the configuration of the CCD and a color separation circuit. In Fig. 12, components corresponding to those shown in Fig. 1 are assigned the same reference numerals.

The CCD 1 is a CCD for independently reading out all lines. Accordingly, only one horizontal transfer unit 7 is provided. Correspondingly, there are provided only respective one CDS 10, AGC 12, and A/D conversion circuit 14.

A signal L0 is outputted from the A/D conversion circuit 14. A signal L1 which is delayed by one line from L0 is outputted from a first 1H delay circuit 16. A signal L2 which is delayed by two lines from L0 is outputted from a second 1H delay circuit 17.

In the fourth embodiment, gain control is carried out not by screen but by areas obtained by dividing a screen, as in the third embodiment. Accordingly, a signal inputted to interpolation means 22 cannot be subjected to gain control.

Each of the signals L0, L1, and L2 outputted from the A/D conversion circuit 14, the first 1H delay circuit 16, and the second 1H delay circuit 17 is branched into two parts. One of the parts is inputted to the interpolation means 22 as it is, and the other part is inputted to the correlated value calculation means 23 through the multipliers 101, 102, and 103. White balance processing is performed in a stage succeeding the color separation circuit.

In the fourth embodiment, one frame is divided into a plurality of integrated value calculation areas $Z_{11}$ and $Z_{NM}$, as shown in Fig. 10, and a by-area RGB integrated value calculation circuit 104 calculates an integrated value for each of R, G, and B signals for each of the integrated value calculation areas $Z_{11}$ and $Z_{NM}$. The integrated value for each of the R, G, and B signals for each of the integrated value calculation areas $Z_{11}$ and $Z_{NM}$ which is calculated by the by-area RGB integrated value calculation circuit 104 is fed to a microcomputer 105.

The microcomputer 105 calculates typical gain values respectively corresponding to the R, G, and B signals for each of the integrated value calculation areas $Z_{11}$ to $Z_{NM}$ by frame and outputs the calculated typical gain values to a pixel-unit RGB gain calculation circuit 109, on the basis of the integrated value for each of the R, G, and B signals for each of the integrated value calculation areas $Z_{11}$ to $Z_{NM}$ which is fed from the by-area RGB integrated value calculation circuit 104, such that an integrated value for each of the R, G, and B signals is a constant value for each of the integrated value calculation areas $Z_{11}$ to $Z_{NM}$.

The pixel-unit RGB gain calculation circuit 109 calculates R, G, and B gains for a pixel corresponding to the signal L1 outputted from the selection circuit 18 and outputs the calculated gains to the selection circuits 106 and 107 on the basis of the typical gain values respectively corresponding to the R, G, and B signals for each of the integrated value calculation areas $Z_{11}$ to $Z_{NM}$, in the same method as that in the third embodiment.

The operations of the selection circuits 106, 107, and 108 are the same as the operations of the selection circuits 106, 107, and 108 described in the second embodiment. Consequently, the signals L0, L1, and L2 are subjected to gain control for each color filter on the basis of the R gain, the G gain, and B gain for the pixel corresponding to the signal L1.

The contents of processing by the horizontal direction correlated value calculation circuit 28 and the vertical direction correlated value calculation circuit 29 are the same as the contents of processing by the horizontal direction correlated value calculation circuit 28 and the vertical direction correlated value calculation circuit 29 in the first embodiment.

The signals inputted to a horizontal interpolation circuit 24 and a vertical interpolation circuit 25 are not signals L0', L1', and L2' which have been subjected to white balance processing but the signals L0, L1, and L2 outputted from the selection circuit 18, as in the second embodiment. However, a method of processing by the horizontal interpolation circuit 24 and the vertical interpolation circuit 25 is the same as a method of processing the horizontal interpolation circuit 24 and the vertical interpolation circuit 25 in the second embodiment.

[B] Description of Fifth Embodiment to Eighth Embodiment

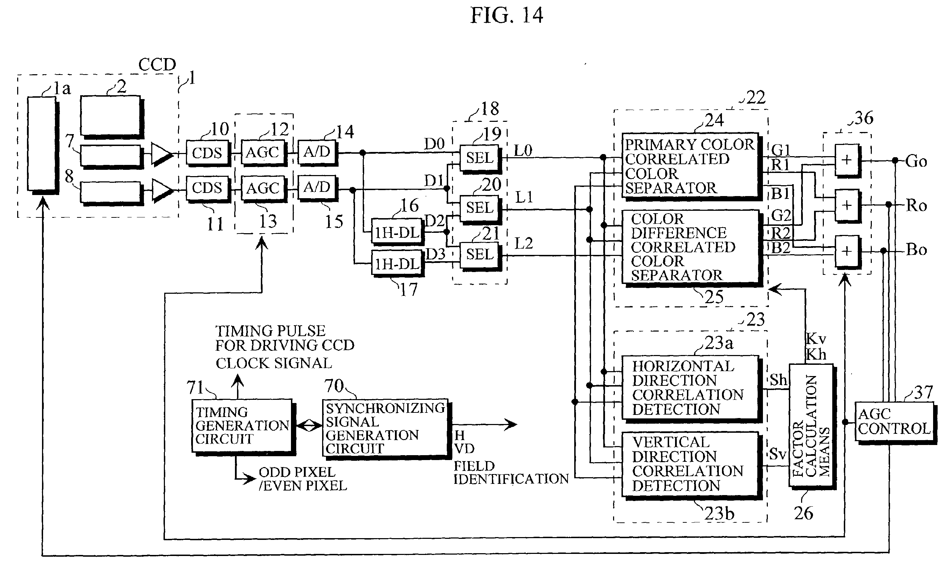

Fifth to eighth embodiments of the present invention will be described on the basis of Figs. 14 to 31.

[B-1] Description of Fifth Embodiment

Fig. 14 illustrates the configuration of a CCD and a color separation circuit.
The CCD 1 is provided with an imaging unit 2 and horizontal transfer units 7 and 8. An iris 1a serving as an f-stop for adjusting the amount of incidence of light on the imaging unit 2 is provided on a front surface of the CCD 1.

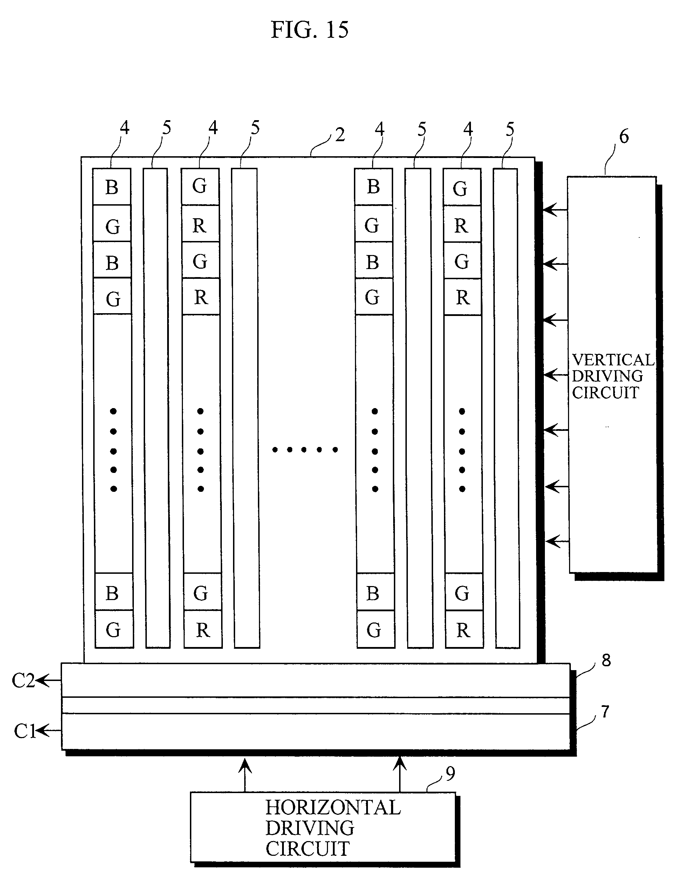

Fig. 15 illustrates the configuration of the CCD 1 and its driving circuit.
The imaging unit 2 is constituted by photodiodes 4 for performing photoelectric conversion and vertical transfer CCDs 5. Each of the photodiodes 4 comprises color filters in an arrangement, as indicated by R, G, and B. A vertical transfer CCD 5 is driven by a vertical driving circuit 6 outside the CCD 1.
The horizontal transfer unit has a dual channel structure using the first horizontal transfer CCD 7 and the second horizontal transfer CCD 8, so that signals corresponding to two lines are simultaneously obtained. The horizontal transfer CCDs 7 and 8 are driven by a horizontal driving circuit 9 outside the CCD 1. The present invention is not limited to the dual channel structure. For example, the horizontal transfer unit may have a single channel structure.
Signals from the horizontal transfer units 7 and 8 are respectively converted into digital signals by A/D conversion circuits 14 and 15 after being processed by CDSs (Correlation Double Sampling Circuits) 10 and 11 and AGC (Automatic Gain Control Circuits) 12 and 13.
A signal D0 outputted from the one A/D conversion circuit 14 is fed to a first selection circuit 19 in a selection circuit 18, and is fed to a first 1H delay circuit 16. A signal D1 outputted from the other A/D conversion circuit 15 is fed to first and second selection circuits 19 and 20 in the selection circuit 18, and is fed to a second 1H delay circuit 17.
Each of the 1H delay circuits 16 and 17 is a memory capable of storing an input signal corresponding to 1H (one horizontal period). A signal which is delayed by 1H from the input signal is outputted from each of the 1H delay circuits 16 and 17. Signal writing and read-out to and from the 1H delay circuit are performed in synchronization with horizontal transfer by the CCD 1. Therefore, a timing generation circuit 71 and a synchronizing signal generation circuit 70 for controlling the operation of the CCD 1 are synchronously operated.
A timing pulse for driving the CCD 1, an odd pixel/even pixel identification signal, and a clock signal are outputted from the timing generation circuit 71. An HD (a horizontal synchronizing signal) , a VD (a vertical synchronizing signal) , and a field identification signal are outputted from the synchronizing signal generation circuit 70. The operation of another circuit portion is controlled by the signals outputted from the synchronizing signal generation circuit 70.
An output D2 of the first 1H delay circuit 16 is fed to second and third selection circuits 20 and 21 in the selection circuit 18. An output D3 of the second 1H delay circuit 17 is fed to the third selection circuit 21 in the selection circuit 18.
The selection circuit 18 selects digital signals corresponding to three lines from digital signals corresponding to four lines depending on whether the type of field is an odd field or an even field, and outputs the selected digital signals. The selection circuits 19, 20, and 21 in the selection circuit 18 are controlled on the basis of the field identification signal representing the type of field outputted from the synchronizing signal generation circuit 70.
That is, the signals D1, D2, and D3 are selected in odd fields, and signals D0, D1 and D2 are selected in even fields. More specifically, when the field identification signal indicates an odd field (for example, a low-level signal), the first selection circuit 19 selects the signal D1, the second selection circuit 20 selects the signal D2, and the third selection circuit 21 selects the signal D3. Conversely, when the field identification signal indicates an even field (for example, a high-level signal), the first selection circuit 19 selects the signal D0, the second selection circuit 20 selects the signal D1, and the third selection circuit 21 selects the signal D2. In this way, signals L0, L1, and L2 corresponding to three lines, which corresponds to the even and odd fields, are outputted from the selection circuit 18.

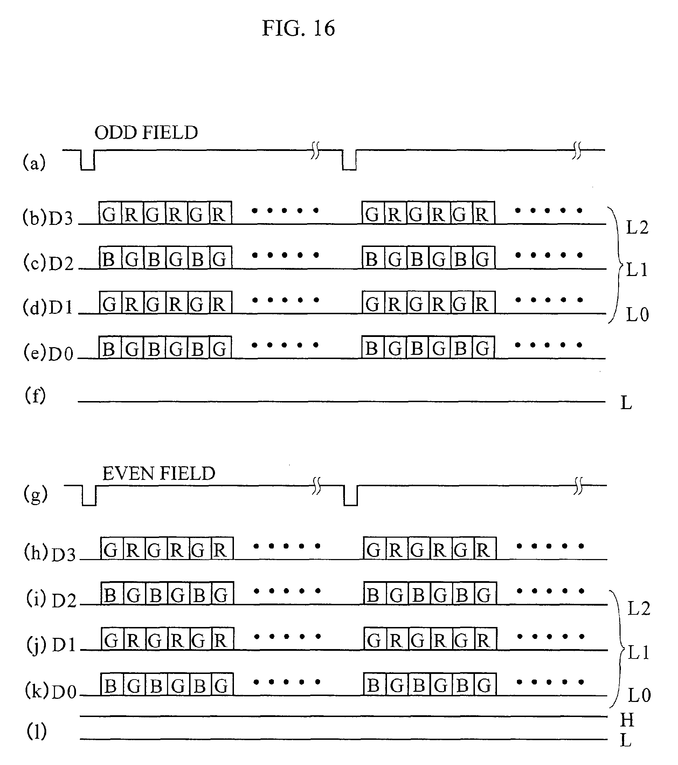

Fig. 16 illustrates the operation of the selection circuit 18.

(a) shown in Fig. 16 indicates the horizontal synchronizing signal (HD) in the odd field. (f) indicates the field identification signal, which is at a low level because it is in the odd field.
(b) to (e) shown in Fig. 16 respectively indicate the input signals D3, D2, D1, and D0 to the selection circuit 18 in the odd fields. When a field including an input image is the odd field, the signals D3, D2, and D1 are outputted from the selection circuit 18 as the signals L2, L1, and L0.
In the odd field, when a signal on the fourth line is inputted as D0, D3 corresponds to the first line, D2 corresponds to the second line, D1 corresponds to the third line, and D0 corresponds to the fourth line, so that the signals on the first line, second line, and third line are selected. Then, D3 corresponds to the third line, D2 corresponds to the fourth line, D1 corresponds to the fifth line, and D0 corresponds to the sixth line, so that the signals on the third line, fourth line, and fifth line are selected.

(g) shown in Fig. 16 indicates the horizontal synchronizing signal (HD) in the even field. (1) indicates the field identification signal, which is at a high level because it is in the even field.

(h) to (k) shown in Fig. 16 respectively indicate the input signals D3, D2, D1, and D0 to the selection circuit 18 in the even field. When a field including an input image is the even field, the signals D2, D1, and D0 are outputted from the selection circuit 18 as the signals L2, L1, and L0.

In the even field, when a signal on the fourth line is inputted as D0, D3 corresponds to the first line, D2 corresponds to the second line, D1 corresponds to the third line, and D0 corresponds to the fourth line, so that the signals on the second line, the third line, and the fourth line are selected. Then, D3 corresponds to the third line, D2 corresponds to the fourth line, D1 corresponds to the fifth line, and D0 corresponds to the sixth line, so that the signals on the fourth line, the fifth line, and the sixth line are selected.

The outputs L0, L1, and L2 of the selection circuit 18 are respectively fed to interpolation processing means 22 and correlation detection means 23.

The interpolation processing means 22 is provided with a primary color correlated color separator 24 for performing interpolation processing utilizing a correlation of the ratio of colors in the horizontal direction or the vertical direction and a color difference correlated color separator 25 for performing interpolation processing utilizing a correlation of the difference between colors in the horizontal direction or the vertical direction.

The correlation detection means 23 is provided with horizontal direction correlation detection means 23a and vertical direction correlation detection means 23b. A horizontal direction correlated value Sh is outputted from the horizontal direction correlation detection means 23a, and a vertical direction correlated value Sv is outputted from the vertical direction correlation detection means 23b. The two outputs Sh and Sv are fed to factor calculation means 32. In the factor calculation means 32, a factor Kh in the horizontal direction and a factor Kv in the vertical direction are calculated on the basis of both the correlated values Sh and Sv. The details of a method of calculating the correlated values and the factors will be described later.

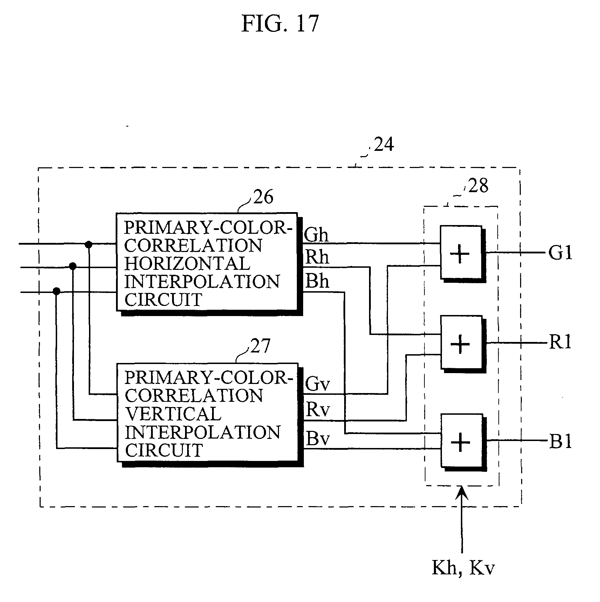

Fig. 17 illustrates the configuration of the primary color correlated color separator 24.

The primary color correlated color separator 24 comprises a primary-color-correlation horizontal interpolation circuit 26, a primary-color-correlation vertical interpolation circuit 27, and weighting and addition means 28.

The primary-color-correlation horizontal interpolation circuit 26 performs interpolation processing suitable for a case where there is strong correlation in the horizontal direction on the basis of an output signal from the CCD 1 corresponding to three lines, to output chrominance signals Gh, Rh, and Bh. The primary-color-correlation vertical interpolation circuit 27 performs interpolation processing suitable for a case where there is a strong correlation in the vertical direction on the basis of an output signal from the CCD 1 corresponding to three lines, to output chrominance signals Gv, Rv, and Bv. A specific interpolation method by each of the interpolation circuits 26 and 27 in the primary color correlated color separator 24 will be described later.

The case where there is a strong correlation in the horizontal direction means a case where there is a strong correlation in the horizontal direction, but there is little correlation in the vertical direction, as in a fine horizontally-striped image. On the other hand, the case where there is a strong correlation in the vertical direction means a case where there is a strong correlation in the vertical direction, but there is little correlation in the vertical direction, as in a fine vertically-striped image.

The chrominance signals Gh, Rh, and Bh and the chrominance signals Gv, Rv and Bv which are respectively outputted from the interpolation circuits 26 and 27 are fed to the weighting and addition means 28. The factor Kh in the horizontal direction and the factor Kv in the vertical direction which are outputted from the factor calculation means 32 are further fed to the weighting and addition means 28. The weighting and addition means 28 multiplies the chrominance signals Gh, Rh, and Bh by the factor Kh, multiplies the chrominance signals Gv, Rv, and Bv by the factor Kv, then adds the respective results of the multiplication of the signals in the same colors (Gh and Gv, Rh and Rv, and Bh and Bv) by the factors, and outputs final chrominance signals G1, R1, and B1.

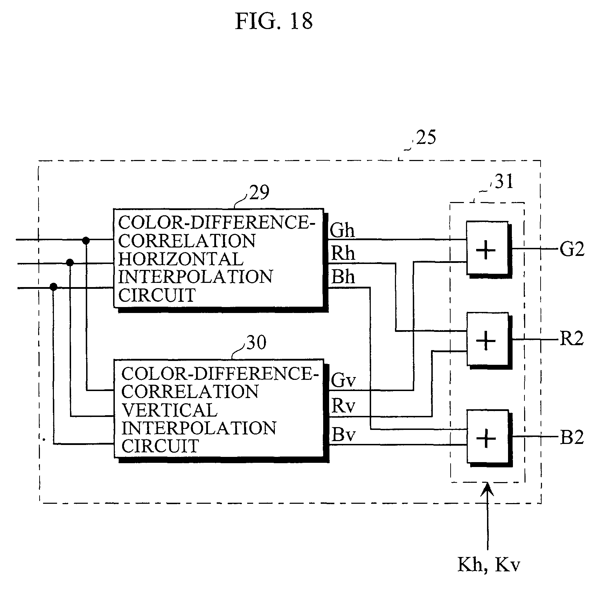

Fig. 18 illustrates the configuration of the color difference correlated color separator 25.

The color difference correlated color separator 25 comprises a color-difference-correlation horizontal interpolation circuit 29, a color-difference-correlation vertical interpolation circuit 30, and weighting and addition means 31. A specific interpolation method by each of the interpolation circuits 29 and 30 in the color difference correlated color separator 25 will be described later.

The color difference correlated color separator 25 and the above-mentioned primary color correlated color separator 24 only differ in the interpolation processing methods in the color-difference-correlation horizontal interpolation circuit 29 and the color-difference-correlation vertical interpolation circuit 30. Chrominance signals G2, R2, and B2 are finally outputted from the weighting and addition means 31 in the color difference correlated color separator 25.

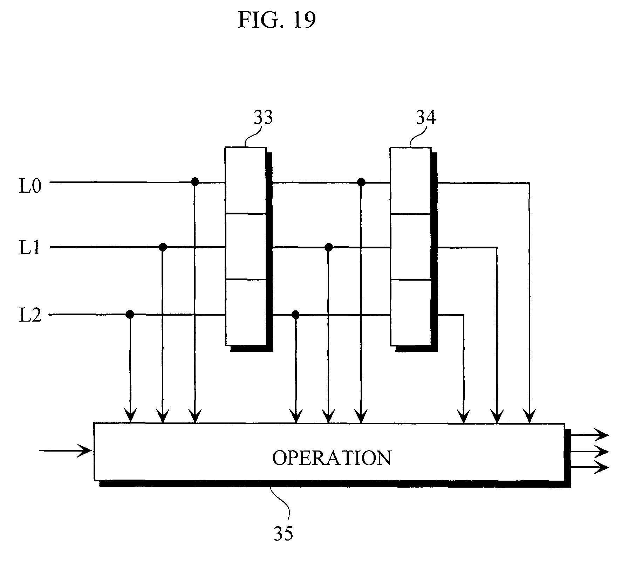

A primary color correlated color separating method and a color difference correlated color separating method will be described. The primary color correlated color separating system will be first described. Each of the primary-color-correlation horizontal interpolation circuit 26 and the primary-color-correlation vertical interpolation circuit 27 is basically constituted by a digital processing circuit composed of a block as shown in Fig. 19. Reference numerals 33 and 34 shown in Fig. 19 denote delay means comprising delay time equal to time required for one pixel to be transmitted, and reference numeral 35 denotes operation means. Each of the interpolation circuits 26 and 27 generates chrominance signals in three colors corresponding to the position of one pixel at the center of a block composed of 3 by 3 pixels on the basis of signals corresponding to the nine pixels in the block in this example.

That is, the signals L0, L1, and L2 outputted from the selection circuits 19, 20, and 21 are inputted to the delay means 33 and 34, whereby the signals corresponding to the nine pixels are simultaneously fed to the operation means 35. Interpolation processing is performed by the operation in the operation means 35.

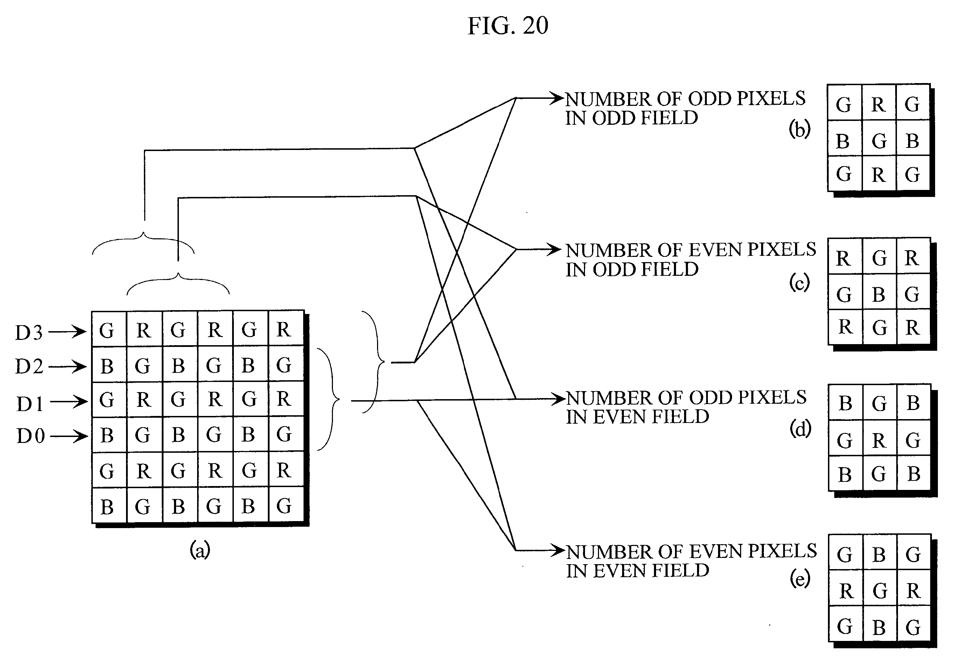

Fig. 20 illustrates the relationship between an arrangement of pixels on the CCD 1 and the selected pixels.

As described in the foregoing, at the time of odd fields, line signals D1, D2, and D3 are first selected. Accordingly, a block composed of 3 by 3 pixels which are subjected to odd-numbered processing is as shown in Fig. 20 (b), and the pixels which are subjected to even-numbered processing are as shown in Fig. 20 (c).

On the other hand, in even fields, line signals D0, D1, and D2 are first selected. Accordingly, a block which is subjected to odd-numbered processing is as shown in Fig. 20 (d), and a block which is subjected to even-numbered processing is as shown in Fig. 20 (e).

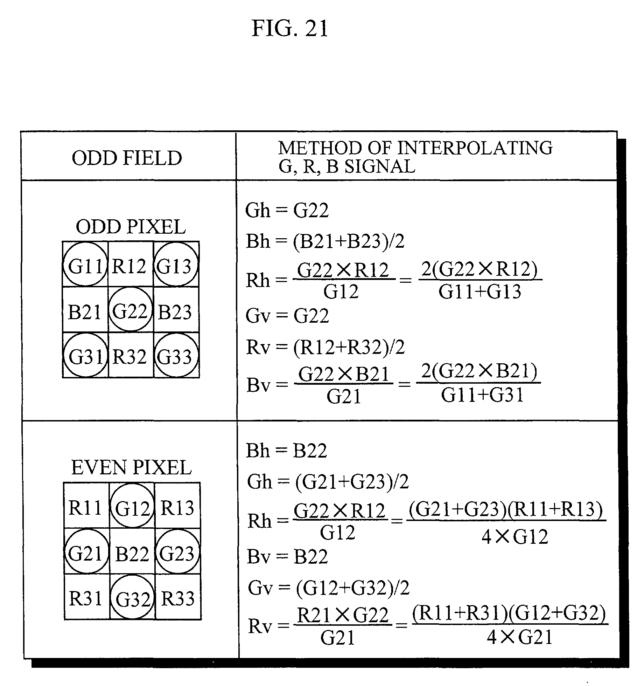

Fig. 21 illustrates an operation expression used by the horizontal interpolation circuit 26 and the vertical interpolation circuit 27 when a block to be processed is an odd-numbered block or an even-numbered block in an odd field.

When the block to be processed is an odd-numbered block in the odd field, Gh, Bh, and Rh for a center pixel (a pixel to be processed) G22 are calculated in the following manner in the horizontal interpolation circuit 26.

That is, a signal G22 at the pixel to be processed G22 is used as it is as Gh for the pixel to be processed G22. Bh for the pixel to be processed G22 is found by calculating the average of signals B21 and B23 at two left and right pixels B21 and B23 with the pixel to be processed G22 interposed therebetween (utilizing a correlation in the horizontal direction). Rh for the pixel to be processed G22 becomes slightly complicated. That is, G12 which is a G signal at a pixel R12 is calculated as the average of G11 and G13 (i.e., utilizing a correlation in the horizontal direction) . Rh is found from the ratio of G12 found by calculation to G22 actually obtained and R12.

The reason for this is that the ratio of the G signal to the R signal or the B signal is approximately equal between the adjacent pixels because the local change of a chrominance signal is smaller than the change of luminance. That is, R22 (= Rh) is found, assuming that G12 : R12 = G22 : R22.

When the block to be processed is an odd-numbered block in the odd field, Gv, Bv, and Rv for the center pixel (the pixel to be processed) G22 are calculated in the following manner in the horizontal interpolation circuit 27.

That is, the signal G22 for the pixel to be processed G22 is utilized as it is as Gv for the pixel to be processed G22. Rv for the pixel to be processed G22 is found by calculating the average of the signals R12 and R32 at upper and lower pixels R12 and R32 with the pixel to be processed G22 interposed therebetween (utilizing a correlation in the vertical direction). Bv for the pixel to be processed G22 is found, similarly to Rh, described above. That is, G21 which is a G signal at the pixel B21 is calculated as the average of G11 and G31 (utilizing a correlation in the vertical direction). Bv is calculated from the ratio of G21 found by calculation to G22 and B21.

When the block to be processed is an even-numbered block in the odd field, Gh, Bh, and Rh corresponding to a center pixel (a pixel to be processed) B22 are calculated in the following manner in the horizontal interpolation circuit 26.

That is, the signal B22 at the pixel to be processed B22 is used as it is as Bh for the pixel to be processed B22. Gh for the pixel to be processed B22 is found by calculating the average of the signals G21 and G23. With respect to Rh for the pixel to be processed B22, the average of R11 and R13 is first found to obtain R12. Rh is found from the ratio of Gh (= G22) to G12 and R12.

When the block to be processed is an even-numbered block in the odd field, Gv, Bv, and Rv for the center pixel (the pixel to be processed) B22 are calculated in the following manner in the vertical interpolation circuit 27.

That is, a signal B22 at the pixel to be processed B22 is used as it is with respect to Bv for the pixel to be processed B22. Gv for the pixel to be processed B22 is found by calculating the average of G12 and G32. With respect to Rv for the pixel to be processed B22, the average of R11 and R31 is first found to obtain R21. Rv is found from the ratio of Gh (= G22) to G21 and R21.

Even when the block to be processed is a block in the even field, the same processing as the processing shown in Fig. 21 is performed, thereby making it possible to obtain signals Rh, Gh, Bh, Rv, Gv, and Bv. That is, when the block to be processed is an odd-numbered block in the even field, an arrangement of pixels composing the block is obtained by replacing R and B in a pixel arrangement in a case where the block to be processed is an even-numbered block in the odd field, as apparent from Figs. 20 (c) and 20 (d). In an operation expression used when the block to be processed is an even-numbered block in the odd field, R and B may be replaced with each other.

When the block to be processed is an even-numbered block in the even field, an arrangement of pixels composing the block is obtained by replacing R and B in a pixel arrangement in a case where the block to be processed is an odd-numbered block in the odd field, as apparent from Figs. 20 (b) and 20 (e). In an operation expression used when the block to be processed is an odd-numbered block in the odd field, therefore, R and B may be replaced with each other.

Each of the horizontal direction correlation detection circuit 23a and the vertical direction correlation detection circuit 23b is basically constituted by a digital processing circuit composed of a block as shown in Fig. 19. Reference numerals 33 and 34 shown in Fig. 19 denote delay means comprising delay time equal to time required for one pixel to be transmitted, and reference numeral 35 denotes operation means.

That is, the signals L0, L1, and L2 outputted from the selection circuits 19, 20, and 21 are inputted to the delay means 33 and 34, whereby signals corresponding to nine pixels are simultaneously fed to the operation means 35. Correlated value detection processing is performed by an operation in the operation means 35.

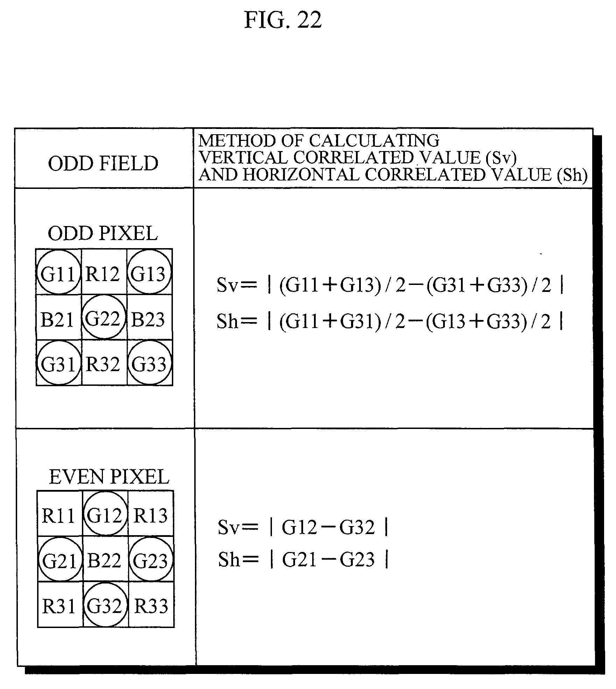

Fig. 22 illustrates an operation expression used by the horizontal direction correlation detection circuit 23a and the vertical direction correlation detection circuit 23b.

The correlated value detection circuits 23a and 23b respectively calculate the correlated values Sh and Sv utilizing G signals whose number is the largest in the block composed of 3 by 3 pixels. When the block to be processed is an odd-numbered block in the odd field, the vertical direction correlated value Sv is found by calculating the absolute value of the difference between G12 and G32. Since G12 and G13 do not actually exist, G12 is calculated from G11 and G13, and G32 is calculated from G31 and G33.

The horizontal direction correlated value Sh in a case where the block to be processed is an odd-numbered block in the odd field is found by calculating the absolute value of the difference between G21 and G23. Since G21 and G23 do not actually exist, G21 is calculated from G11 and G31, and G23 is calculated from G13 and G33.

When the block to be processed is an even-numbered block in the odd field, the vertical direction correlated value Sv is found by calculating the absolute value of the difference between G12 and G32. The horizontal direction correlated value Sh is found by calculating the absolute value of the difference between G21 and G23.

Even when the block to be processed is a block in the even field, the pattern of the G signal is the same, whereby the same processing may be performed. However, the operation expression in a case where the block to be processed is an odd-numbered block in the odd field and the operation expression in a case where the block to be processed is an even-numbered block in the even field are the same. The operation expression in a case where the block to be processed is an even-numbered block in the odd field and the operation expression in a case where the block to be processed is an odd-numbered block in the even field are the same.

The smaller the horizontal direction correlated value Sh is, the stronger the correlation in the horizontal direction is. Similarly, the smaller the vertical direction correlated value Sv is, the stronger the correlation in the vertical direction is.

The factor calculation means 32 calculates factors Kh and Kv in the horizontal direction and the vertical direction from the correlated values Sh and Sv which are respectively calculated by the correlated value detection circuits 23a and 23b. Each of the factors Kh and Kv is found by the following expression (3). A relationship of Kh + Kv = 1 holds between Kh and Kv.

$$Kh = Sv/(Sh + Sv)$$
$$Kv = Sh/(Sh + Sv)$$
$$\cdots \quad (3)$$

Consequently, the factor Kh in the horizontal direction becomes large when the correlation in the horizontal direction is smaller than the correlation in the vertical direction (Sh is smaller than Sv). The factor Kv in the vertical direction becomes large when the correlation in the vertical direction is smaller than the correlation in the horizontal direction (when Sv is smaller than Sh).

As described in the foregoing, the signal components of R, G, and B signals corresponding to one pixel in the CCD are calculated utilizing outputs from pixels (nine pixels in all) around the one pixel. At this time, however, an operation is executed using two methods, that is, a processing method suitable for a case where there is a strong correlation in the horizontal direction and a processing method suitable for a case where there is a strong correlation in the vertical direction. The results of the operation by the two methods are weighted and added depending on which of the horizontal correlation and the vertical correlation in the vicinity of the pixel is stronger.

The operation of the primary color correlated color separator 24 will be then described by taking a specific example.

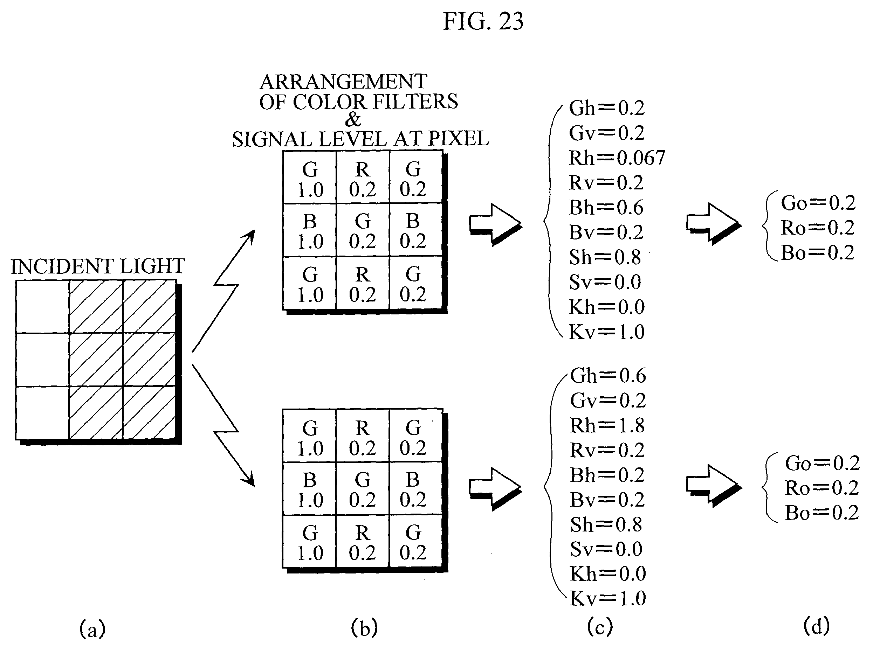

Consider a case where white incident light as shown in Fig. 23 (a) is incident on a block to be processed. In the example shown in Fig. 23 (a), an example of an edge where there is no color component and only the luminance level is changed is illustrated. Consequently, all the levels of the signal components of the R, G, and B signals at a pixel to be processed (a center pixel) should be the same as a correct result.

Fig. 23 (b) schematically illustrates the output level from each of the pixels. The reason why two types of output levels are illustrated differ in the color pattern, as described above, depending on the odd-numbered processing and the even-numbered processing. The signals Rh, Rv, Gh, Gv, Bh, and Bv at the pixel to be processed (center pixel), weighting factors Kh and Kv, and the signals R, G, and B (Ro, Go, and Bo) at the pixel to be processed (center pixel) obtained by adding the weighting factors, which are calculated in accordance with Figs. 21 and 22, are as shown in Figs. 23 (c) and 23 (d). The levels of the signal components of the R, G, and B signals at the central position are all equal to 0.2.

The color difference correlated color separating system will be then described.

The color difference correlated color separator 25 and the above-mentioned primary color correlated color separator 24 differ from each other in the following points. That is, the interpolation processing in the primary color correlated color separator 24 utilizes the property of the ratio of the G signal to the R signal or the B signal being approximately equal between adjacent pixels because the local change of a chrominance signal is smaller than the change in luminance and the property of the ratio of a low-frequency component to a high-frequency component of a particular color component being also equal in the other color component. Contrary to this, the interpolation processing in the color difference correlated color separator 25 utilizes the property of the difference between the G signal and the R signal or the B signal being approximately equal between adjacent pixels because the local change of a chrominance signal is small and the property of the difference between a low-frequency component and a high-frequency component of a particular color component being also equal in the other color component.

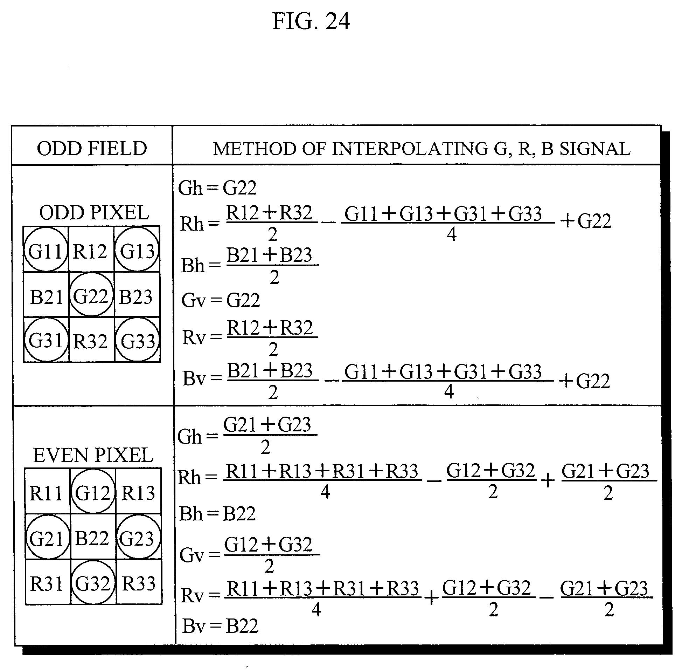

Fig. 24 illustrates an operation expression used by the horizontal interpolation circuit 29 and the vertical interpolation circuit 30 in the color difference correlated color separator 25 when a block to be processed is an odd-numbered block or an even-numbered block in a odd field.

When the block to be processed is an odd-numbered block in the odd field, Gh, Bh, and Rh for a center pixel (a pixel to be processed) G22 are calculated in the following manner in the horizontal interpolation circuit 29.

That is, a signal G22 at the pixel to be processed G22 is used as it is as Gh for the pixel to be processed G22. Bh for the pixel to be processed G22 is found by calculating the average of signals B21 and B23 at the two left and right pixels B21 and B23 with the pixel to be processed G22 interposed therebetween. With respect to Rh for the pixel to be processed G22, the property of the difference between the G signal and the R signal or the B signal being approximately equal between the adjacent pixels is utilized. That is, the following expression (4) holds:

$$\begin{aligned} R22 - G22 &= R12 - G12 = R32 - G32 \\ &= \{(R12 - G12)/2\} + \{(R32 - G32)/2\} \end{aligned} \qquad \cdots \quad (4)$$

Consequently, Rh (= R22) for the pixel to be processed G22 is found by the following expression (5) :

$$\begin{aligned} Rh &= \{(R12 - G12)/2\} + \{(R32 - G32)/2\} + G22 \\ &= \{(R12 + R32)/2\} - \{(G12 + G32)/2\} + G22 \qquad \cdots \quad (5) \\ &= \{(R12 + R32)/2\} - \{(G11 + G13 + G31 + G33)/4\} + G22 \end{aligned}$$

Even when the block to be processed is an even-numbered block in the odd field, the horizontal interpolation circuit 29 performs the same operation, to find Gh, Rh, and Bh.

Furthermore, a method of finding Gv, Rv, and Bv in the vertical interpolation circuit 30 is basically the same as that in interpolation processing by the horizontal interpolation circuit 29 and hence, the description thereof is not repeated.

In an operation expression shown in Fig. 21, operation processing is occupied by multiplication and division. In an operation expression shown in Fig. 24, multiplication and division are replaced with addition and subtraction, and division for making a circuit arrangement particularly complicated is not used, thereby making it possible to significantly simplify the configuration of an operation processing circuit.

According to the interpolation processing by a color difference correlated color separating system, the number of false chrominance signals is small with respect to an image close to a monotone image, thereby obtaining an image of high quality.

The chrominance signals G1, R1, B1, G2, R2, and B2 outputted from the color separators 24 and 25, described above, are fed to a weighting and addition circuit 36 serving as synthesis means. The weighting and addition means 36 outputs final chrominance signals G0, R0, and B0.

The chrominance signals G0, R0, and B0 outputted from the weighting and addition circuit 36 are fed to an AGC control circuit 37. The AGC control circuit 37 adjusts the degree of an aperture of an iris 1a from the chrominance signals G0, R0, and B0 or the gains of the AGCs 12 and 13 in order to control the luminance level of an image picked up. Specifically, the iris 1a is basically controlled, to issue an instruction to reduce the gains of the AGCs when the aperture of the iris 1a increases to a maximum. At this time, an instruction to control the gains of the AGCs 12 and 13 is also fed to the weighting and addition circuit 36.

The weighting and addition circuit 36 is so operated as to weight the chrominance signals G1, R1, and B1 from the primary color correlated color separator 24, weight the chrominance signals G2, R2, and B2 from the color difference correlated color separator 25, and add the weighted chrominance signals depending on the gains of the AGCs 12 and 13. Specifically, the chrominance signals are added such that the chrominance signals G1, R1, and B1 are larger than the chrominance signals G2, R2, and B2 if the gains of the AGCs 12 and 13 are small, while being added such that the chrominance signals G2, R2, and B2 are larger than the chrominance signals G1, R1, and B1 if the gains are large, so that the chrominance signals G0, R0, and B0 are outputted.

In Fig. 23, it is assumed that the detection of a correlation is erroneously detected due to the effect of noise or the like. Consequently, the values of Go, Ro, and Bo are the values of Gh, Rh, and Bh. As a result, an error occurs with respect to a value (0.2) which should be inherently taken. The error is 0.133 in the odd-numbered R signal and 0.4 in the odd-numbered B signal (an upper drawing in Fig. 23 (b)), and 0.4 in the even-numbered G signal and 1.6 in the even-numbered R signal (a lower drawing in Fig. 23 (b)). The total sum of the errors is 2.533.

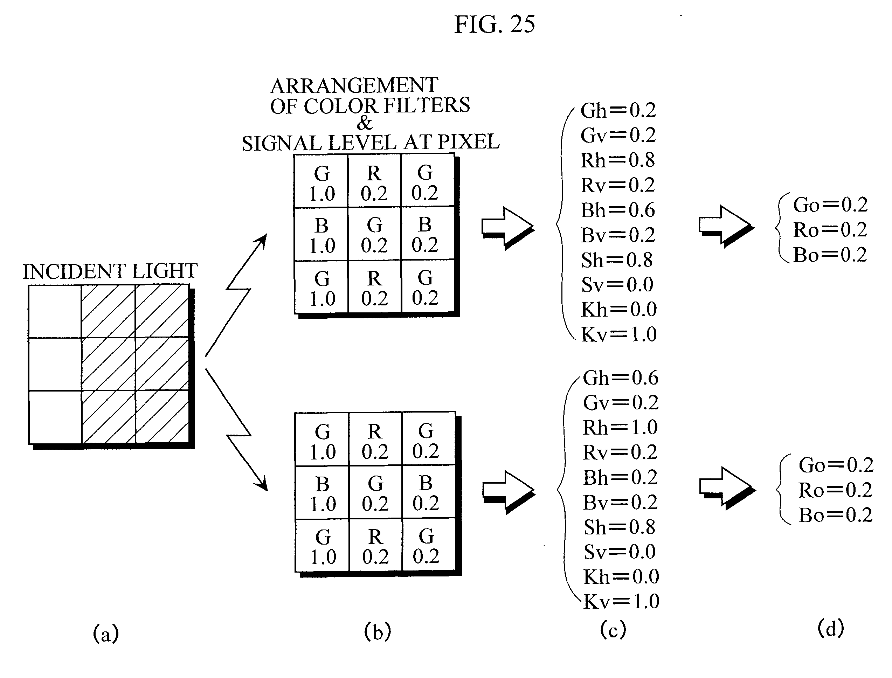

On the other hand, in a case where interpolation is performed in the color difference correlated color separator 25, even when the direction of a correlation is erroneously detected, the sum of the errors is only 2.2, as shown in Fig. 25. This is an example. Since division is used in primary color correlation, however, the precision is degraded when the divisor (the denominator) approaches zero, so that the number of errors is increased. As a result, noise is increased. Particularly when it is dark, the probability that the divisor approaches zero is high, causing a problem.

In the present embodiment, the chrominance signals are added such that the chrominance signals G1, R1, and B1 are larger than the chrominance signals G2, R2, and B2 if the gains of the AGCs 12 and 13 are small, while being added such that the chrominance signals G2, R2, and B2 are larger than the chrominance signals G1, R1, and B1 if the gains are large. Accordingly, it is possible to restrain the emphasis of noise included in an image produced by primary color correlated color separation processing and false colors included therein, and the resolution can be improved.

Although in the above-mentioned embodiment, an output of the primary color correlated color separator 24 and an output of the color difference correlated color separator 25 are weighted and added depending on the gains of the AGCs 12 and 13, the present invention is not limited to the same. For example, they may be weighted and added depending on the contrast of an image and the level of a signal.

Although in the above-mentioned primary color correlated color separator 24 and the color difference correlated color separator 25, interpolation processing is performed in units of 3 by 3 pixels, the present invention is not limited to the same. For example, if the interpolation processing is performed in units of 5 by 5 pixels, the false colors are further restrained, thereby making it possible to improve the resolution. Although in the present embodiment, description was made of a case where the present invention is applied to an interlace signal, the present invention is also applicable to a progressive signal.

[B-2] Description of Sixth Embodiment

The sixth embodiment differs from the fifth embodiment in terms of the operations of a primary-color-correlation horizontal interpolation circuit 26 and a primary-color-correlation vertical interpolation circuit 27 in a primary color correlated color separator 24. Further, the sixth embodiment differs from the fifth embodiment in terms of the operations of a color-difference-correlation horizontal interpolation circuit 29 and a color-difference-correlation vertical interpolation circuit 30 in a color difference correlated color separator 25.

Each of interpolation circuits 26, 27, 29, and 30 produces chrominance signals in three colors corresponding to one pixel (a pixel to be processed) at the center on the basis of signals at 25 pixels in a block composed of 5 by 5 pixels in the sixth embodiment.

[B-2-1] Description of the interpolation circuits 26 arid 27 in the primary color correlated color separator 24

Description is now made of the operations of the primary-color-correlation horizontal interpolation circuit 26 and the primary-color-correlation vertical interpolation circuit 27 in the primary color correlated color separator 24. The interpolation circuits 26 and 27 calculate chrominance signals R, G, and B at the pixel to be processed by a primary color correlated color separating system.

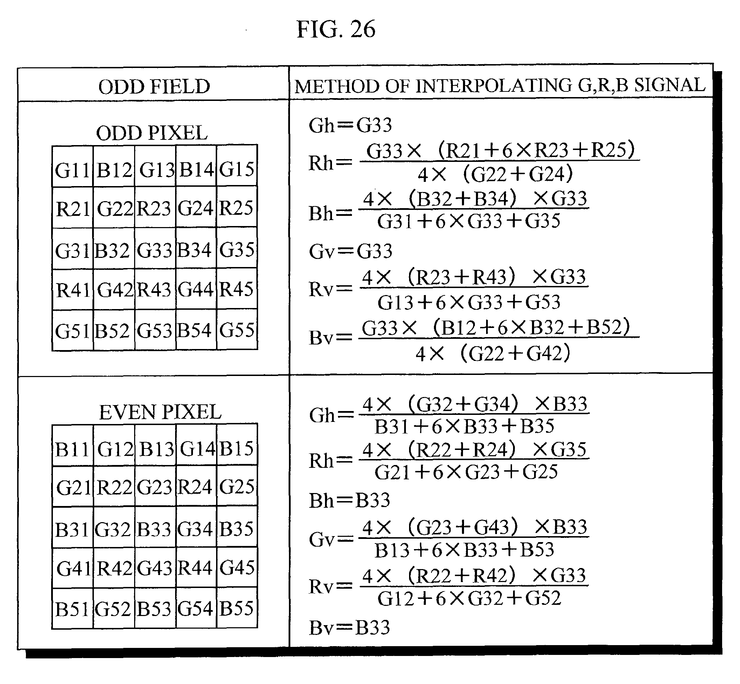

Fig. 26 illustrates an operation expression used by the horizontal interpolation circuit 26 and the vertical interpolation circuit 27 in a case where the block to be processed is an odd-numbered block or an even-numbered block in an odd field.

The operation of the vertical interpolation circuit 27 in a case where the block to be processed is an odd-numbered block in the odd field is taken as an example, to describe the primary color correlated color separating system.

In the primary color correlated color separating system, the direction in which the correlation of an image is strong in a local area is detected, to first calculate two low-frequency chrominance signals on the same line by filtering by lines in only the direction in which there is a strong correlation (here, the vertical direction or the horizontal direction).

In the vertical interpolation circuit 27, it is assumed that there is a strong correlation in the vertical direction at the pixel to be processed in the block composed of 5 by 5 pixels in an upper part of Fig. 26, to calculate low-frequency chrominance signals $R_{VLPF3}$ and $G_{VLFF3}$ of the chrominance signals R and G from a vertical line including a pixel to be processed G33.

In a signal which is gently changed, the ratio of chrominance signals at respective pixels and the ratio of their low-frequency chrominance signals are approximately equal. When there is a strong correlation in the vertical direction, therefore, Rv (=R33) /G33 = $R_{VLPF3}/G_{VLPF3}$ holds on the vertical line including the pixel to be processed G33. Consequently, another chrominance signal Rv existing on the vertical line including the pixel to be processed G33 can be found from the ratio of the two low-frequency chrominance signals $R_{VLPF3}$ and $G_{VLPF3}$ on the vertical line and a chrominance signal G33 at the pixel to be processed G33.

As Gv for the pixel to be processed G33, the signal G33 at the pixel to be processed G33 is used as it is.

Only the chrominance signals (R and G in this example) existing on a line to be an object (the vertical line in this example) can be color-separated from the respective one vertical and horizontal lines. A chrominance signal Bv which does not exist on the line to be an object is found from signals on the adjacent lines and the signal at the pixel to be processed utilizing a correlation between colors, that is, the property of "the change in the ratio of colors is small even in the direction in which a correlation between images is low (the horizontal direction in this example)", that is, Bv(=B33)/G33 = B32/G32 = B34/G34.

Here, the horizontal direction is the direction in which the correlation is low. Accordingly, the ratios of the chrominance signals at both the adjacent pixels in the horizontal direction are averaged, thereby compensating for the low correlation, as shown in the expression (6):

$$Bv = [\{(B32/G32) + (B34/G34)\}/2] \times G33 \tag{6}$$

The expression (6) may be replaced with an expression obtained by simplifying the expression (6), i.e., Bv = (B32/G32) $\times$ G33. In Fig. 26, an expression obtained by expanding the simplified expression is described as Bv.

It is desirable that filters for finding a low-frequency component of a signal used herein respectively have frequency characteristics as close to each other as possible. In order to match the filter characteristics of signals which differ in sampling phase, the tap length of the filter must be significantly lengthened, thereby significantly increasing the circuit scale, which is not practical.

By paying attention to the fact that a low-frequency chrominance signal component in the direction in which the correlation is high, low-frequency portions, having a frequency up to one-half of the Nyquist frequency, of the filters are attached importance to, to use the following expression (7) such that the respective frequency characteristics in the low-frequency portions are close to each other and the number of taps composing each of the filters can be reduced:

$$\begin{aligned} G_{VLPF3} &= (G13 + 6 \times G33 + G53)/8 \\ R_{VLPF3} &= (R23 + R43)/2 \end{aligned} \quad \cdots \quad (7)$$

Although description was made of the operation of the vertical interpolation circuit 27 in a case where the block to be processed is an odd-numbered block in the odd field, Rv, Gv, and Bv at the pixel to be processed can be found by the same operation even in a case where the block to be processed is an even-numbered block in the odd field.

In the horizontal interpolation circuit 26, it is assumed that there is a strong correlation in the horizontal direction, thereby making it possible to find Rh, Gh, and Bh at the pixel to be processed.

Even when the block to be processed is in the even field, color separation can be made by the same method.

In the primary color correlated color separating system, division for finding the ratio of chrominance signals is performed. When the divisor is close to zero, therefore, an error is increased. When the divisor is zero, an operation cannot be executed. Therefore, such exception processing that a constant is forced to be one in a case where the divisor is zero. When a screen is dark, and there is noise in a dark part of an image, therefore, the noise is emphasized, thereby producing dot noises.

That is, the primary color correlated color separating system exhibits good characteristics when the state of an input image is good, that is, input light is sufficient.

[B-2-2] Description of the interpolation circuits 29 and 30 in the color difference correlated color separator 25

Description is made of the operations of the color-difference-correlation horizontal interpolation circuit 29 and the color-difference-correlation vertical interpolation circuit 30 in the color difference correlated color separator 25. The interpolation circuits 29 and 30 calculate chrominance signals R, G, and B at the pixel to be processed by a color difference correlated color separating system.

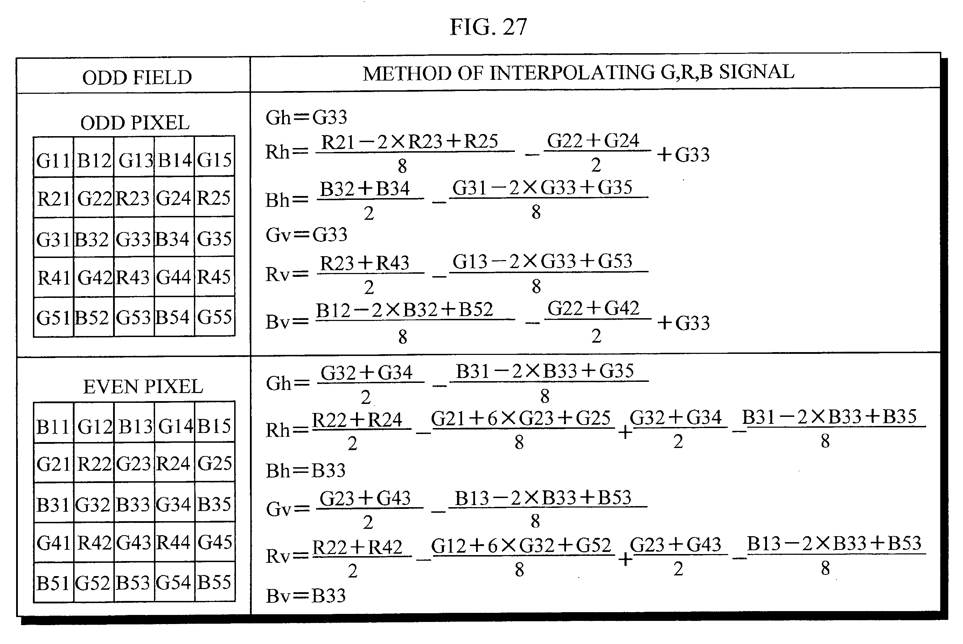

Fig. 27 illustrates an operation expression used by the horizontal interpolation circuit 29 and the vertical interpolation circuit 30 in a case where the block to be processed is an odd-numbered block or an even-numbered block in an odd field.

The operation of the vertical interpolation circuit 30 in a case where the block to be processed is an odd-numbered block in the odd field is taken as an example, to describe the color difference correlated color separating system.

In the color difference correlated color separating system, the direction in which a correlation of images is strong in a local area is detected utilizing a color difference correlation "the change in a color difference signal in a local area is small", to first calculate two low-frequency chrominance signals on the same line by filtering by lines in only the direction in which there is a strong correlation (here, the vertical direction or the horizontal direction).

In the vertical interpolation circuit 30, it is assumed that there is a strong correlation in the vertical direction at the pixel to be processed G33 in the block composed of 5 by 5 pixels in an upper part of Fig. 27, to calculate low-frequency chrominance signals $R_{VLPF3}$ and $G_{VLPF3}$ of the chrominance signals R and G from a vertical line including the pixel to be processed G33.

In a signal which is gently changed, the difference between chrominance signals at respective pixels and the difference between their low-frequency chrominance signals are approximately equal. When there is a strong correlation in the vertical direction, Rv(=R33) - G33 = $R_{VLPF3}$ - $G_{VLPF3}$ holds on the vertical line including the pixel to be processed G33. Consequently, another chrominance signal Rv existing on the vertical line including the pixel to be processed G33 can be found from the difference between the two low-frequency chrominance signals $R_{VLPF3}$ and $G_{VLPF3}$ on the vertical line and a chrominance signal G33 at the pixel to be processed G33.

As Gv for the pixel to be processed G33, the signal G33 at the pixel to be processed G33 is used as it is.

Only the chrominance signals (R and G in this example) existing on a line to be an object (the vertical line in this example) can be color-separated from the respective one vertical and horizontal lines. A chrominance signal Bv which does not exist on the line to be an object is found from signals on the adjacent lines and the signal at the pixel to be processed utilizing a correlation between colors, that is, the property of "the change in the difference in color is small even in the direction in which a correlation between images is low (the horizontal direction in this example)", that is, Bv(=B33)-G33 = B32-G32 = B34-G34.

Here, the horizontal direction is the direction in which the correlation is low. Accordingly, the color difference signals at both the adjacent pixels in the horizontal direction are averaged, as expressed by the following expression (8), thereby compensating for the low correlation.

$$Bv=[\{(B32\text{-}G32)+(B34\text{-}G34))/2]+G33 \tag{8}$$

The expression (8) may be replaced with an expression obtained by simplifying the expression (8), i.e., Bv = (B32-G32) + G33. In Fig. 27, an expression obtained by expanding the simplified expression is described as Bv.

Although description was made of the operation of the vertical interpolation circuit 30 in a case where the block to be processed is an odd-numbered block in the odd field, Rv, Gv, and Bv at the pixel to be processed can be found by the same operation even in a case where the block to be processed is an even-numbered block in the odd field.

In the horizontal interpolation circuit 29, it is assumed that there is a strong correlation in the horizontal direction, thereby making it possible to find Rh, Gh, and Bh at the pixel to be processed.

Even when the block to be processed is in the even field, color separation can be made by the same method.

In the color difference correlated color separating system, chrominance signals can be found only by addition and subtraction without performing division. Therefore, the system is characterized in that an error does not easily occur, and it also resists noise.

As the gain of automatic gain control means of a camera is increased, more chrominance signals calculated by the color difference correlated color separating system which resists noise are utilized. When the gain of the automatic gain control means of the camera is small, more chrominance signals calculated by the primary color correlated color separating system are utilized.

[B-3] Description of Seventh Embodiment

The seventh embodiment differs from the fifth embodiment in terms of the operations of a primary-color-correlation horizontal interpolation circuit 26 and a primary-color-correlation vertical interpolation circuit 27 in a primary color correlated color separator 24. Further, the seventh embodiment differs from the fifth embodiment in terms of the operations of a color-difference-correlation horizontal interpolation circuit 29 and a color-difference-correlation vertical interpolation circuit 30 in a color difference correlated color separator 25.

Each of the interpolation circuits 26, 27, 29 and 30 produces chrominance signals in three colors corresponding to one pixel (a pixel to be processed) at the center on the basis of signals at 25 pixels in a block composed of 5 by 5 pixels in the seventh embodiment.

In the seventh embodiment, the color-difference-correlation horizontal interpolation circuit 29 and the color-difference-correlation vertical interpolation circuit 30 in the color difference correlated color separator 25 shown in Fig. 14 find chrominance signals R, G, and B at the pixel to be processed by a color difference correlated color separating system, as in the above-mentioned sixth embodiment.

Furthermore, in the seventh embodiment, the primary color correlated color separator 24 shown in Fig. 14 is replaced with a color separator for finding chrominance signals R, G, and B at the pixel to be processed by an adaptive correlated color separating system (hereinafter referred to as an adaptive correlated color separator) in place of the primary color correlated color separator 24 shown in Fig. 14. The primary-color-correlation horizontal interpolation circuit 26 and the primary-color-correlation vertical interpolation circuit 27 in the adaptive correlated color separator 24 find chrominance signals R, G, and B at the pixel to be processed by the adaptive correlated color separating system 24.

Description is made of the operations of the primary-color-correlation horizontal interpolation circuit 26 and the primary-color-correlation vertical interpolation circuit 27 in the adaptive correlated color separator 24. The interpolation circuits 26 and 27 calculate the chrominance signals R, G, and B at the pixel to be processed by the adaptive correlated color separating system.

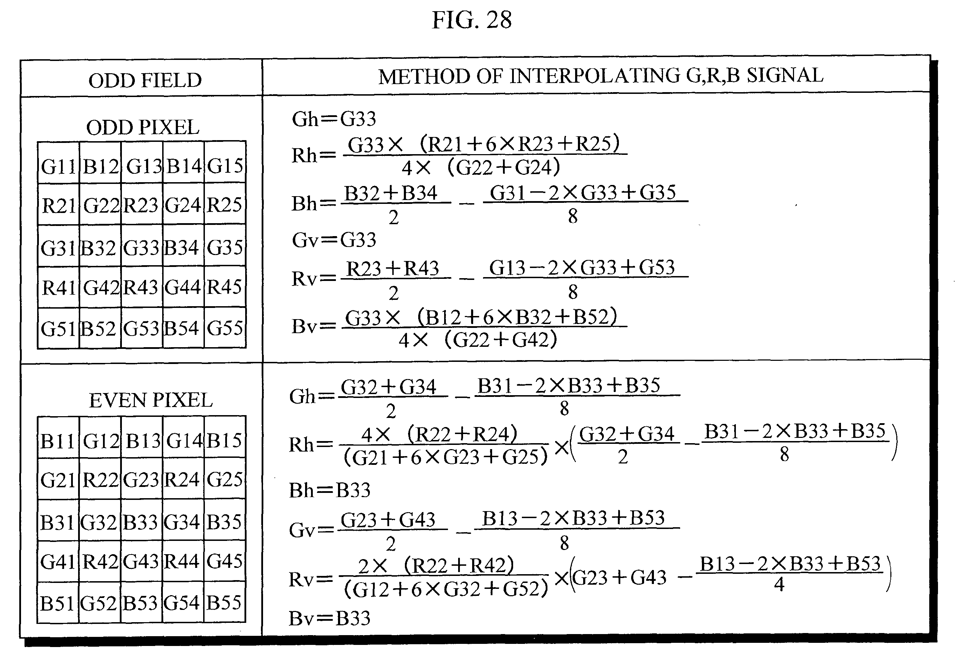

Fig. 28 illustrates an operation expression used by the primary-color-correlation horizontal interpolation circuit 26 and the primary-color-correlation vertical interpolation circuit 27 in the adaptive correlated color separator 24 in a case where the block to be processed is an odd-numbered block or an even-numbered block in an odd field.

The operation of the vertical interpolation circuit 27 in a case where the block to be processed is an odd-numbered block in the odd field is taken as an example, to describe the adaptive correlated color separating system.

In the adaptive correlated color separating system, the direction in which the correlation of an image is strong in a local area is detected, to first calculate two low-frequency chrominance signals on the same line by filtering by lines in only the direction in which there is a strong correlation (here, the vertical direction or the horizontal direction).

In the vertical interpolation circuit 27, it is assumed that there is a strong correlation in the vertical direction at the pixel to be processed G33 in the block composed of 5 by 5 pixels in an upper part of Fig. 28, to calculate low-frequency chrominance signals $R_{VLPF3}$ and $G_{VLPF3}$ of the chrominance signals R and G from a vertical line including the pixel to be processed G33.

In a signal which is gently changed, the difference between chrominance signals at respective pixels and the difference between their low-frequency chrominance signals are approximately equal. When there is a strong correlation in the vertical direction, therefore, Rv(= R33) - G33 = $R_{VLPF3}$-$G_{VLPF3}$ holds on the vertical line including the pixel to be processed G33. Consequently, another chrominance signal Rv existing on the vertical line including the pixel to be processed G33 can be found from the difference between the two low-frequency chrominance signals $R_{VLPF3}$ and $G_{VLPF3}$ on the vertical line and the chrominance signal G33 at the pixel to be processed. A method of finding Rv is the same as that in the color difference correlated color separating system.

As Gv for the pixel to be processed G33, the signal G33 for the pixel to be processed G33 is used as it is.

Only the chrominance signals (R and G in this example) existing on a line to be an object (the vertical line in this example) can be color-separated from the respective one vertical and horizontal lines. A chrominance signal Bv which does not exist on the line to be an object is found from signals on the adjacent lines and the signal at the pixel to be processed utilizing a correlation between colors, that is, the property of "the change in the ratio of colors is small even in the direction in which a correlation between images is low (the horizontal direction in this example)", that is, Bv (=B33)/G33 = B32/G32 = B34/G34. A method of finding Bv is the same as that in the primary color correlated color separating system.

Here, the horizontal direction is the direction in which the correlation is low. Accordingly, the color difference signals at both the adjacent pixels in the horizontal direction are averaged, as expressed by the following equation (9), thereby compensating for the low correlation.

$$Bv = [\{(B32/G32) + (B34/G34)\}/2] \times G33 \qquad\qquad (9)$$

The expression (9) may be replaced with an expression obtained by simplifying the expression (9), i.e., Bv = (B32/G32) × G33. In Fig. 28, an expression obtained by expanding the simplified expression is described as Bv.

Although description was made of the operation of the vertical interpolation circuit 27 in a case where the block to be processed is an odd-numbered block in the odd field, Rv, Gv, and Bv at the pixel to be processed can be found by the same operation even in a case where the block to be processed is an even-numbered block in the odd field.

In the horizontal interpolation circuit 26, it is assumed that there is a strong correlation in the horizontal direction, thereby making it possible to find Rh, Gh, and Bh at the pixel to be processed.

Even when the block to be processed is in the even field, color separation can be made by the same method.

[B-4] Description of Modified Example of Correlation Detection Means 23

Description is now made of a modified example of the correlation detection means 23. The modified example is, of course, applicable to the second or seventh embodiment. For example, it is also applicable in the fifth embodiment.

Used as the horizontal direction correlation detection means 23a and the vertical direction correlation detection means 23b in the correlation detection means 23 may be ones for calculating a horizontal direction correlated value Sh and a vertical direction correlated value Sv in the following manner.

The horizontal direction correlation detection means 23a and the vertical direction correlation detection means 23b respectively calculate correlated values Sh and Sv corresponding to one pixel (a pixel to be processed) at the center on the basis of signals at 25 pixels in a block composed of 5 by 5 pixels.

[B-4-1] Description is first made of a method of calculating the correlated values Sh and Sv in a case where a block to be processed is an odd-numbered block in an odd field, as shown in an upper part of Fig. 27

In a case where the block to be processed is achromatic, the correlated values Sh and Sv are calculated on the basis of the following expression (10)

$$Sh = \left| \frac{G22 + 2 \times B32 + G42}{4} - \frac{R23 + 2 \times G33 + R43}{4} \right|$$

$$+ \left| \frac{R23 + 2 \times G33 + R43}{4} - \frac{G24 + 2 \times B34 + G44}{4} \right|$$

$$Sv = \left| \frac{G22 + 2 \times R23 + G24}{4} - \frac{B32 + 2 \times G33 + B34}{4} \right| \qquad \cdots \quad (10)$$

$$+ \left| \frac{B32 + 2 \times G33 + B34}{4} - \frac{G42 + 2 \times R43 + G44}{4} \right|$$

The foregoing expression (10) can be simplified, as expressed by the following expression (10)':

$$Sh = \left| \frac{G22 + 2 \times B32 + G42}{4} - \frac{G24 + 2 \times B34 + G44}{4} \right|$$

$$Sv = \left| \frac{G22 + 2 \times R23 + G24}{4} - \frac{G42 + 2 \times R43 + G44}{4} \right| \qquad \cdots \quad (10)'$$

If a horizontal direction correlated value is found after averaging signals in the vertical direction in a case where the horizontal direction correlated value Sh is calculated, and a vertical direction correlated value is found after averaging signals in the horizontal direction in a case where the vertical direction correlated value Sv is calculated, as expressed in the following expression (11), the precision is further improved:

$$Sh = \left| \frac{B12 + 2 \times (G22 + 2 \times B32 + G42) + B52}{10} - \frac{G13 + 2 \times (R23 + 2 \times G33 + R43) + G53}{10} \right|$$

$$+ \left| \frac{G13 + 2 \times (R23 + 2 \times G33 + R43) + G53}{10} - \frac{B14 + 2 \times (G24 + 2 \times B34 + G44) + G54}{10} \right|$$

$$Sv = \left| \frac{R21 + 2 \times (G22 + 2 \times R23 + G24) + R25}{10} - \frac{G31 + 2 \times (B32 + 2 \times G33 + B34) + G35}{10} \right|$$

$$+ \left| \frac{G31 + 2 \times (B32 + 2 \times G33 + B34) + G35}{10} - \frac{R41 + 2 \times (G42 + 2 \times R43 + G44) + R45}{10} \right|$$

$$\cdots \quad (1 1)$$

A dividing circuit may be able to be constituted by only a bit shift circuit by taking factors by which G33, B22, and B34 are respectively multiplexed as one in the foregoing expression (11) for calculating Sh and taking factors by which G33, R23, and R43 are respectively multiplexed as one in the expression for calculating Sv, to take the divisor in each of the expressions as eight which is the n-th power of 2.

The foregoing expression (11) can be simplified, as expressed by the following expression (11)':

$$Sh = \left| \frac{B12 + 2 \times (G22 + 2 \times B32 + G42) + B52}{10} - \frac{B14 + 2 \times (G24 + 2 \times B34 + G44) + G54}{10} \right|$$

$$Sv = \left| \frac{R21 + 2 \times (G22 + 2 \times R23 + G24) + R25}{10} - \frac{R41 + 2 \times (G42 + 2 \times R43 + G44) + R45}{10} \right|$$

$$\cdots \quad (1 1)'$$

In a chromatic image, the ratios of the R, G, and B signals outputted from a CCD including color filters in a Mosaic arrangement differ depending on the color of a subject. Therefore, a disturbance is created depending on the color of the subject, so that the precision of the result of the judgment in the direction of a correlation using signals representing all pixels composing the CCD. Therefore, the intensity of the color of an input image is judged from the result of the integration of color difference signals in respective parts of a screen. In the chromatic image, the correlated values Sh and Sv are calculated on the basis of only the G signal.

That is, when the block to be processed is a chromatic color, the correlated values Sh and Sv are calculated on the basis of the following expression (12):

$$Sh = \left| \frac{(G22+G42)}{2} - \frac{(G13+2\times G33+G53)}{4} \right| + \left| \frac{(G13+2\times G33+G53)}{4} - \frac{(G24+G44)}{2} \right|$$

$$Sv = \left| \frac{(G22+G24)}{2} - \frac{(G31+2\times G33+G35)}{4} \right| + \left| \frac{(G31+2\times G33+G35)}{4} - \frac{(G42+G44)}{2} \right|$$

$$\cdots \quad (12)$$

The foregoing expression (12) can be simplified, as expressed by the following expression (12)':

$$Sh = \left| \frac{(G22+G42)}{2} - \frac{(G24+G44)}{2} \right|$$

$$Sv = \left| \frac{(G22+G24)}{2} - \frac{(G42+G44)}{2} \right|$$

$$\cdots \quad (12)'$$

[B-4-2] Description is made of a method of calculating the correlated values Sh and Sv in a case where a block to be processed is an even-numbered block in an odd field, as shown in a lower part of Fig. 27

In a case where the block to be processed is achromatic, the correlated values Sh and Sv are calculated on the basis of the following expression (13)

$$Sh = \left| \frac{R22+2\times G32+R42}{4} - \frac{G23+2\times B33+G43}{4} \right|$$

$$+ \left| \frac{G23+2\times B33+G43}{4} - \frac{R24+2\times G34+R44}{4} \right|$$

$$Sv = \left| \frac{R22+2\times G23+R24}{4} - \frac{G32+2\times B33+G34}{4} \right|$$

$$+ \left| \frac{G32+2\times B33+G34}{4} - \frac{R42+2\times G43+R44}{4} \right|$$

$$\cdots \quad (13)$$

The foregoing expression (13) can be simplified, as expressed by the following expression (13)'.

$$Sh = \left| \frac{R22+2\times G32+R42}{4} - \frac{R24+2\times G34+R44}{4} \right|$$

$$Sv = \left| \frac{R22+2\times G23+R24}{4} - \frac{R42+2\times G43+R44}{4} \right|$$

$$\cdots \quad (13)'$$

If a horizontal direction correlated value is found after averaging signals in the vertical direction in a case where the horizontal direction correlated value Sh is calculated, and a vertical direction correlated value is found after averaging signals in the horizontal direction in a case where the vertical direction correlated value Sv is calculated, as expressed by the following expression (14), the precision is further improved:

$$Sh = \left| \frac{G12 + 2 \times (R22 + 2 \times G32 + R42) + G52}{10} - \frac{B13 + 2 \times (G23 + 2 \times B33 + G43) + B53}{10} \right.$$

$$\left. + \left| \frac{B13 + 2 \times (G23 + 2 \times B33 + G43) + B53}{10} - \frac{G14 + 2 \times (R24 + 2 \times G34 + R44) + G54}{10} \right| \right.$$

$$Sv = \left| \frac{G21 + 2 \times (R22 + 2 \times G23 + R24) + G25}{10} - \frac{B31 + 2 \times (G32 + 2 \times B33 + G34) + B35}{10} \right.$$

$$\left. + \left| \frac{B31 + 2 \times (G32 + 2 \times B33 + G34) + B35}{10} - \frac{G41 + 2 \times (R42 + 2 \times G43 + R44) + G45}{10} \right| \right.$$

$$\cdots \quad (14)$$

A dividing circuit may be able to be calculated by only a bit shift circuit by taking factors by which B33, G32, and G34 are respectively multiplexed as one in the foregoing expression (14) for calculating Sh and taking factors by which B33, G23, and G43 are respectively multiplexed as one in the expression for calculating Sv, to take the divisor in each of the expressions as eight which is the n-th power of 2.

The foregoing expression (14) can be simplified, as expressed by the following expression (14)':

$$Sh = \left| \frac{G12 + 2 \times (R22 + 2 \times G32 + R42) + G52}{10} - \frac{G14 + 2 \times (R24 + 2 \times G34 + R44) + G54}{10} \right|$$

$$Sv = \left| \frac{G21 + 2 \times (R22 + 2 \times G23 + R24) + G25}{10} - \frac{G41 + 2 \times (R42 + 2 \times G43 + R44) + G45}{10} \right|$$

$$\cdots \quad (14)'$$

In a case where the block to be processed is chromatic, the correlated values Sh and Sv are calculated on the basis of the following expression (15) :

$$Sh = \left| \frac{G12 + 2 \times G32 + G52}{4} - \frac{G23 + G43}{2} \right| + \left| \frac{G23 + G43}{2} - \frac{G14 + 2 \times G34 + G54}{4} \right|$$

$$Sv = \left| \frac{G21 + 2 \times G23 + G25}{4} - \frac{G32 + G34}{2} \right| + \left| \frac{G32 + G34}{2} - \frac{G41 + 2 \times G43 + G45}{4} \right|$$

$$\cdots \quad (15)$$

The foregoing expression (15) can be simplified, as expressed by the following expression (15)':

$$Sh = \left| \frac{G12 + 2 \times G32 + G52}{4} - \frac{G14 + 2 \times G34 + G54}{4} \right|$$

$$Sv = \left| \frac{G21 + 2 \times G23 + G25}{4} - \frac{G41 + 2 \times G43 + G45}{4} \right| \qquad \cdots \ (15)'$$

In a case where the block to be processed is chromatic, the correlated values Sh and Sv may be calculated on the basis of the following expression (16), as in the fifth embodiment:

$$Sh = |G32 - G34|$$
$$Sv = |G23 - G43| \qquad \cdots \ (16)$$

Even when the block to be processed is a block in an even field, the pattern of the G signal is the same, so that the same processing may be performed. An operation expression in a case where the block to be processed is an odd-numbered block in an odd field and an operation expression in a case where the block to be processed is an even-numbered block in an even field are the same, and an operation expression in a case where the block to be processed is an even-numbered block in an odd field and an operation expression in a case where the block to be processed is an odd-numbered block in an even field are the same.

[B-4-3] Description of modification of a method of calculating correlated values Sh and Sv

Letting Sh1 and Sv1 be respectively correlated values calculated using operation expressions suitable for the case of an achromatic color (e.g., the foregoing expression (10)' or (13)'), and letting Sh2 and Sv2 calculated using operation expressions suitable for the case of a chromatic color (e.g., the foregoing expression (12)' or (15)'), the correlated values may be weighted and added depending on the intensity of the color of a block to be processed, to find correlated values Sh and Sv.

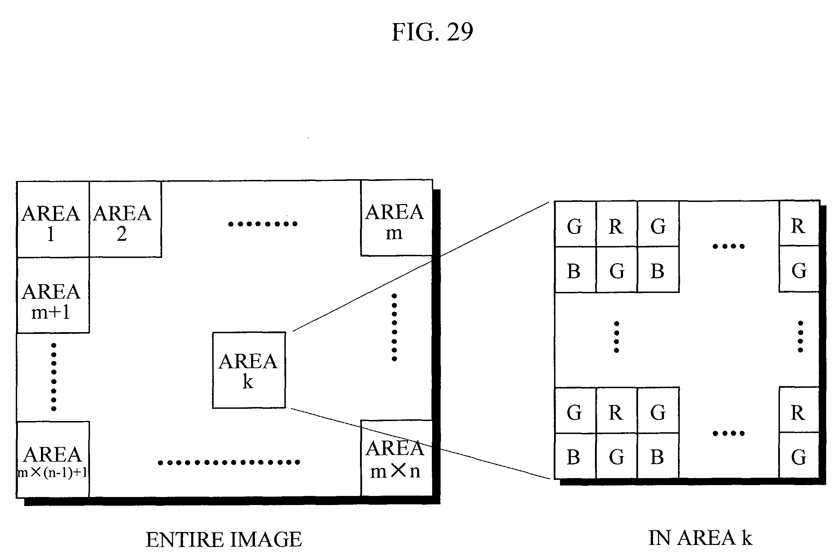

First, as shown in Fig. 29, the way how an image is colored is calculated as a chroma integrated value $C_k$ on the basis of the following expression (17) from signals representing all pixels in a chroma detection area k including a block to be processed out of a plurality of chroma detection areas previously set:

$$C_k = \left| \sum_k G - \sum_k R \right| + \left| \sum_k G - \sum_k B \right| \qquad \cdots \ (17)$$

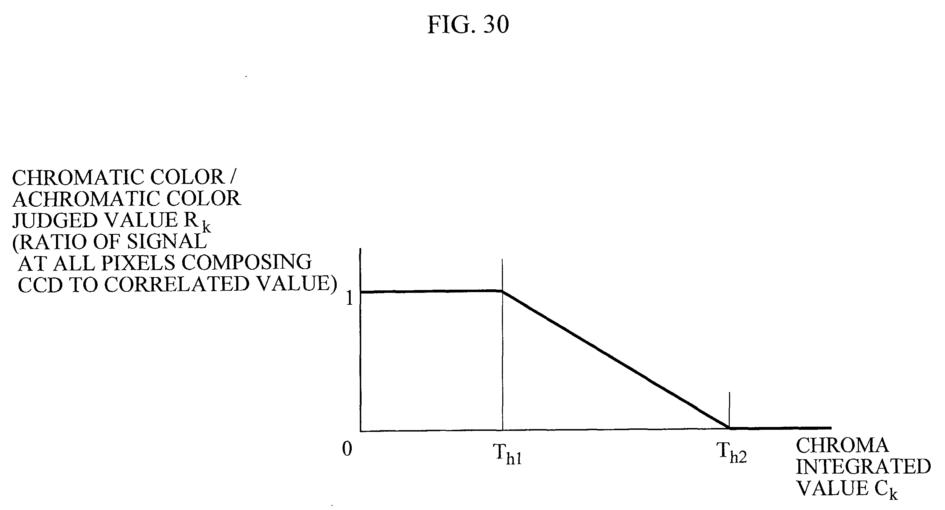

A chromatic color/achromatic color judged value $R_k$ corresponding to the chroma integrated value $C_k$ calculated by the foregoing expression (17) is found from the relationship between a chroma integrated value $C_k$ and the chromatic color/achromatic color judged value $R_k$, as shown in Fig. 30. Two threshold values Th1 and Th2 in Fig. 30 are experimentally found because the characteristics of an optical LPF (Low-Pass Filter) indispensable in systematization are also related to the threshold values Th1 and Th2.

The correlated values Sh1 and Sv1 calculated using the operation expression suitable for the case of the achromatic color and the correlated values Sh2 and Sv2 calculated using the operation expression suitable for the case of a chromatic color are weighted and added on the basis of the obtained chromatic color/achromatic color judged value $R_k$, as expressed by the following expression:

$$Sh = R_k \times Sh1 + (1 - R_k) \times Sh2$$
$$Sv = R_k \times Sv1 + (1 - R_k) \times Sv2 \qquad \cdots \ (18)$$

It goes without saying that only the expressions (12) and (15) may be used, assuming that the block to be processed is always chromatic, without making chromatic color/achromatic color judgment.

[B-5] Description of Eighth Embodiment

In the primary color correlated color separating system used in the primary color correlated color separator 24 shown in Fig. 14, when the divisor is zero, the result of the calculation increases to infinity. In a case where the divisor in an operation expression used in the primary color correlated color separating system is zero, it is preferable that even when the gain of automatic gain control means of a camera is small, chrominance signals calculated by the color difference correlated color separator 25 shown in Fig. 14 are used.

Here, "a case where the divisor is zero." In the primary color correlated color separating system, when the divisor is decreased, errors are increased. Even when the divisor is not more than a predetermined value, the chrominance signals calculated by the color difference correlated color separator 25 shown in Fig. 14 may be used.

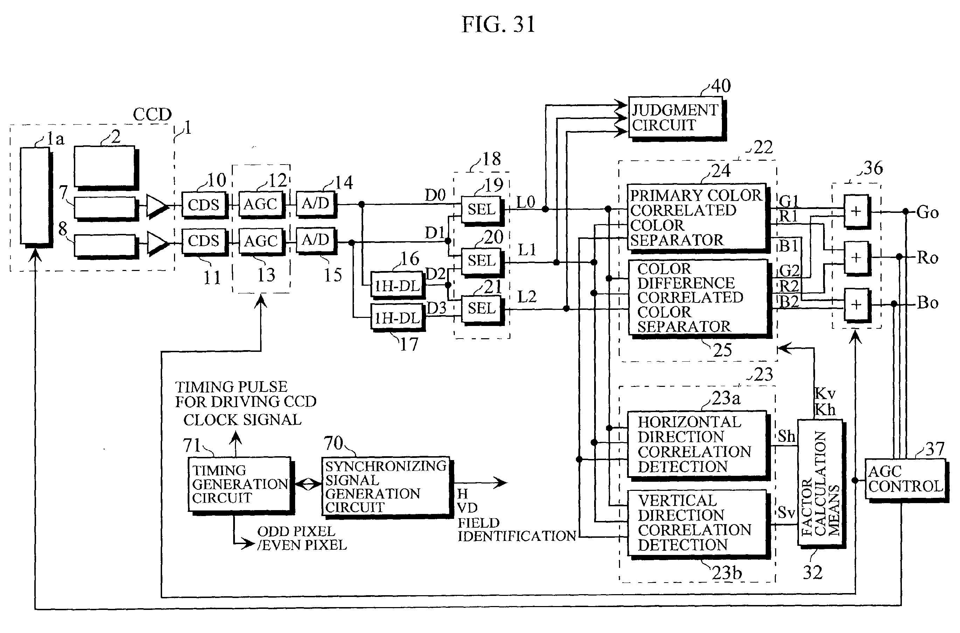

Specifically, a judgment circuit 40 having L0, L1, and L2 as inputs and judging whether or not a pixel having a pixel value of zero is included in a block to be processed (the block to be processed composed of 3 by 3 pixels in the fifth embodiment, or the block to be processed composed of 5 by 5 pixels in the sixth embodiment) is provided, as shown in Fig. 31, in the fifth embodiment.

The judgment circuit 40 outputs, when it judges that the pixel having a pixel value of zero is included in the block to be processed, a command to output only the chrominance signals calculated by the color difference correlated color separator 25 is outputted to the weighting and addition circuit 36.

It is preferable that the same control is also carried out in the fifth embodiment. In the adaptive correlated color separator 24 in the seventh embodiment, the result of the calculation increases to infinity when the divisor is zero, as in the primary color correlated color separator 24 shown in Fig. 14. Therefore, it is preferable that the same control is also carried out in the seventh embodiment,.

Although the present invention has been described and illustrated in detail, it is clearly understood that the same is by way of illustration and example only and is not to be taken by way of limitation, the spirit and scope of the present invention being limited only by the terms of the appended claims.

**Claims**

1. A color separation circuit of a single chip color camera for subjecting a signal from a solid-state image pick-up device having a plurality of types of color filters which differ in spectral sensitivity characteristics arranged therein, respectively, so as to correspond to pixels to color separation processing, comprising:

   a plurality of types of interpolation processing means for respectively producing a plurality of chrominance signal components at the arbitrary pixel to be processed and suitable for a case where there is a strong correlation in each of a plurality of types of directions centered at the pixel to be processed from the chrominance signal components at the pixel to be processed and the pixels around the pixel to be processed;
   correlated value detection means for detecting the direction in which there is a strong correlation out of the plurality of types of directions centered at the pixel to be processed on the basis of the chrominance signal components at the pixel to be processed and the pixels around the pixel to processed; and
   means for finding the plurality of chrominance signal components at said pixel to be processed on the basis of the direction in which there is a strong correlation which is detected by the correlated value detection means and each of the chrominance signal components produced by the interpolation processing means,
   gain control means for controlling a gain for each of the color filters being provided in a stage preceding the correlated value detection means,
   the correlated value detection means detecting the direction in which there is a strong correlation out of the plurality of types of directions centered at the pixel to be processed on the basis of signals at all the pixels in a block composed of M by N pixels centered at the pixel to be processed which are inputted through the gain control means.

2. The color separation circuit of the single chip color camera according to claim 1, wherein

   the gain control means carries out the gain control on the basis of color information obtained from the whole of a screen.

3. The color separation circuit of the single chip color camera according to claim 2, wherein

the color filter arranged in the solid-state image pick-up device is a primary color filter, and
the gain control means is also used as white balance processing means in the color camera.

4. The color separation circuit of the single chip color camera according to claim 2, wherein

each of the interpolation means calculates the plurality of chrominance signal components at the pixel to be processed on the basis of the chrominance signal components at the pixel to be processed and the pixels around the pixel to be processed after the gain control processing is performed by the gain control means.

5. The color separation circuit of the single chip color camera according to claim 1, wherein

the gain control means divides a screen into a plurality of areas, and performs the gain control processing for each of the areas.

6. A color separation circuit of a single chip color camera for subjecting a signal from a solid-state image pick-up device having a plurality of types of color filters which differ in spectral sensitivity characteristics arranged therein, respectively, so as to correspond to pixels to color separation processing, comprising:

first interpolation processing means for producing a plurality of chrominance signal components at the arbitrary pixel to be processed and suitable for a case where there is a strong correlation in the horizontal direction at the pixel to be processed from chrominance signal components at the pixel to be processed and the pixels around the pixel to be processed;
second interpolation processing means for producing a plurality of chrominance signal components at the pixel to be processed and suitable for a case where there is a strong correlation in the vertical direction at the pixel to be processed from the chrominance signal components at the pixel to be processed and the pixels around the pixel to be processed;
correlated value calculation means for calculating correlated values in the horizontal direction and the vertical direction at the pixel to be processed on the basis of the chrominance signal components at the pixel to be processed and the pixels around the pixel to processed; and
weighting and addition means for weighting each of the chrominance signal components produced by the first interpolation processing means, weighting each of the chrominance signal components produced by the second interpolation processing means, and adding the weighted chrominance signal components depending on the correlated values in the horizontal direction and the vertical direction which are calculated by the correlated value calculation means, to find the plurality of chrominance signal components at the pixel to be processed,
gain control means for controlling a gain for each of the color filters being provided in a stage preceding the correlated value detection means,
the correlated value calculation means calculating the correlated values in the horizontal direction and the vertical direction at the pixel to be processed on the basis of signals at all the pixels in a block composed of M by N pixels centered at the pixel to be processed which are inputted through the gain control means.

7. The color separation circuit of the single chip color camera according to claim 6, wherein

the gain control means carries out the gain control on the basis of color information obtained from the whole of a screen.

8. The color separation circuit of the single chip color camera according to claim 7, wherein

the color filter arranged in the solid-state image pick-up device is a primary color filter, and
the gain control means is also used as white balance processing means in the color camera.

9. The color separation circuit of the single chip color camera according to claim 7, wherein

the first interpolation means and the second interpolation means calculate a plurality of chrominance signal components at the pixel to be processed on the basis of the chrominance signal components at the pixel to be processed and the pixels around the pixel to be processed after the gain control processing is performed by the gain control means.

10. The color separation circuit of the single chip color camera according to claim 6, wherein

the gain control means divides a screen into a plurality of areas, and performs the gain control processing for each of the areas.

**11.** In a color separation circuit of a single chip color camera for processing a signal from a solid-state image pick-up device having a plurality of types of color filters which differ in spectral sensitivity characteristics arranged in a Mosaic shape therein, respectively, so as to correspond to pixels through an automatic gain control circuit for carrying out gain control, the color separation circuit of the single chip color camera, comprising:

two or more types of color separation means, which differ in a chrominance signal component producing system, provided in order to produce a plurality of chrominance signal components at the arbitrary pixel to be processed on the basis of chrominance signal components at the pixel to be processed and the pixels around the pixel to be processed; and
synthesis means for synthesizing the chrominance signal components respectively produced by the color separation means on the basis of the signal from the solid-state image pick-up device.

**12.** The color separation circuit of the single chip color camera according to claim 11, wherein

the synthesis means synthesizes the chrominance signal components produced by the respective color separation means on the basis of the level of the signal from the solid-state image pick-up device.

**13.** The color separation circuit of the single chip color camera according to claim 11, wherein

the synthesis means synthesizes the chrominance signal components produced by the respective color separation means on the basis of the gain, of the automatic gain control circuit, corresponding to the level of the signal from the solid-state image pick-up device.

**14.** The color separation circuit of the single chip color camera according to claim 11, wherein

primary color correlated color separation means for producing a plurality of chrominance signal components at the arbitrary pixel to be processed utilizing the correlation of the ratio of colors in the horizontal direction or the vertical direction on the basis of the chrominance signal components at the pixel to be processed and the pixels around the pixel to be processed and color difference correlated color separation means for producing the plurality of chrominance signal components at the arbitrary pixel to be processed utilizing the correlation of the difference between colors in the horizontal direction or the vertical direction on the basis of the chrominance signal components at the pixel to be processed and the pixels around the pixel to be processed are provided as the color separation means, and
the synthesis means synthesizes the chrominance signal components produced by both the color separation means such that each of the chrominance signal components produced by the primary color correlated color separation means is increased when the level of the signal from the solid-state image pick-up device is high, while synthesizing the chrominance signal components produced by both the color separation means such that each of the chrominance signal components produced by the color difference correlated color separation means is increased when the level of the signal from the solid-state image pick-up device is low.

**15.** The color separation circuit of the single chip color camera according to claim 11, wherein

primary color correlated color separation means for producing a plurality of chrominance signal components at the arbitrary pixel to be processed utilizing the correlation of the ratio of colors in the horizontal direction or the vertical direction on the basis of the chrominance signal components at the pixel to be processed and the pixels around the pixel to be processed, and color difference correlated color separation means for producing the plurality of chrominance signal components at the arbitrary pixel to be processed utilizing the correlation of the difference between colors in the horizontal direction or the vertical direction on the basis of the chrominance signal components at the pixel to be processed and the pixels around the pixel to be processed are provided as the color separation means, and
the synthesis means synthesizes the chrominance signal components produced by both the color separation means such that each of the chrominance signal components produced by the color difference correlated color separation means is increased when the gain, of the automatic gain control circuit, corresponding to the level of the signal from the solid-state image pick-up device is large, while synthesizing the chrominance signal components produced by both the color separation means such that each of the chrominance signal components produced by the primary color correlated color separation means is increased when the gain of the automatic gain control circuit is small.

**16.** The color separation circuit of the single chip color camera according to claim 14, further comprising

correlated value detection means for finding correlated values in the horizontal direction and the vertical direction at the pixel to be processed,
each of the primary color correlated color separation means and the color difference correlated color separation means comprising horizontal direction processing means for producing a chrominance signal component suitable for a case where there is a strong correlation in the horizontal direction and vertical direction processing means for producing a chrominance signal component suitable for a case where there is a strong correlation in the vertical direction,
each of the primary color correlated color separation means and the color difference correlated color separation means weighting each of the chrominance signal components produced by the horizontal direction processing means, weighting each of the chrominance signal components produced by the vertical direction processing means, and adding the weighted chrominance signal components depending on the correlated values in the horizontal direction and the vertical direction which are detected by the correlated value detection means, to find a plurality of chrominance signal components at the pixel to be processed.

**17.** The color separation circuit of the single chip color camera according to claim 15, further comprising

correlated value detection means for finding correlated values in the horizontal direction and the vertical direction at the pixel to be processed,
each of the primary color correlated color separation means and the color difference correlated color separation means comprising horizontal direction processing means for producing a chrominance signal component suitable for a case where there is a strong correlation in the horizontal direction and vertical direction processing means for producing a chrominance signal component suitable for a case where there is a strong correlation in the vertical direction,
each of the primary color correlated color separation means and the color difference correlated color separation means weighting each of the chrominance signal components produced by the horizontal direction processing means, weighting each of the chrominance signal components produced by the vertical direction processing means, and adding the weighted chrominance signal components depending on the correlated values in the horizontal direction and the vertical direction which are detected by the correlated value detection means, to find a plurality of chrominance signal components at the pixel to be processed.

**18.** The color separation circuit of the single chip color camera according to claim 11, wherein

adaptive correlated color separation means for producing a plurality of chrominance signal components at the arbitrary pixel to be processed utilizing the correlation of the difference between colors in the direction in which there is a strong correlation out of the horizontal direction and the vertical direction, while utilizing the correlation of the ratio of colors in the direction in which there is a weak correlation on the basis of the chrominance signal components at the pixel to be processed and the pixels around the pixel to be processed, and color difference correlated color separation means for producing the plurality of chrominance signal components at the arbitrary pixel to be processed utilizing the correlation of the difference between colors in the horizontal direction or the vertical direction on the basis of the chrominance signal components at the pixel to be processed and the pixels around the pixel to be processed are provided as the color separation means, and
the synthesis means synthesizes the chrominance signal components produced by both the color separation means such that each of the chrominance signal components produced by the adaptive correlated color separation means is increased when the level of the signal from the solid-state image pick-up device is high, while synthesizing the chrominance signal components produced by both the color separation means such that each of the chrominance signal components produced by the color difference correlated color separation means is increased when the level of the signal from the solid-state image pick-up device is low.

**19.** The color separation circuit of the single chip color camera according to claim 11, wherein

adaptive correlated color separation means for producing a plurality of chrominance signal components at the arbitrary pixel to be processed utilizing the correlation of the difference between colors in the direction in which there is a strong correlation out of the horizontal direction and the vertical direction, while utilizing the correlation of the ratio of colors in the direction in which there is a weak correlation on the basis of the chrominance signal components at the pixel to be processed and the pixels around the pixel to be processed, and color difference correlated color separation means for producing the plurality of chrominance signal components at the arbitrary pixel to be processed utilizing the correlation of the difference between colors in the horizontal direction or the vertical direction on the basis of the chrominance signal components at the pixel to be processed and the pixels around the pixel to be processed are provided as the color separation means, and

the synthesis means synthesizes the chrominance signal components produced by both the color separation means such that each of the chrominance signal components produced by the color difference correlated color separation means is increased when the gain, of the automatic gain control circuit, corresponding to the level of the signal from the solid-state image pick-up device is large, while synthesizing the chrominance signal components produced by both the color separation means such that each of the chrominance signal components produced by the adaptive correlated color separation means is increased when the gain of the automatic gain control circuit is small.

**20.** The color separation circuit of the single chip color camera according to claim 18, further comprising

correlated value detection means for finding correlated values in the horizontal direction and the vertical direction at the pixel to be processed,

each of the adaptive correlated color separation means and the color difference correlated color separation means comprising horizontal direction processing means for producing a chrominance signal component suitable for a case where there is a strong correlation in the horizontal direction and vertical direction processing means for producing a chrominance signal component suitable for a case where there is a strong correlation in the vertical direction,

each of the adaptive correlated color separation means and the color difference correlated color separation means weighting each of the chrominance signal components produced by the horizontal direction processing means, weighting each of the chrominance signal components produced by the vertical direction processing means, and adding the weighted chrominance signal components depending on the correlated values in the horizontal direction and the vertical direction which are detected by the correlated value detection means, to find the plurality of chrominance signal components at the pixel to be processed.

**21.** The color separation circuit of the single chip color camera according to claim 19, further comprising

correlated value detection means for finding correlated values in the horizontal direction and the vertical direction at the pixel to be processed,

each of the adaptive correlated color separation means and the color difference correlated color separation means comprising horizontal direction processing means for producing a chrominance signal component suitable for a case where there is a strong correlation in the horizontal direction and vertical direction processing means for producing a chrominance signal component suitable for a case where there is a strong correlation in the vertical direction,

each of the adaptive correlated color separation means and the color difference correlated color separation means weighting each of the chrominance signal components produced by the horizontal direction processing means, weighting each of the chrominance signal components produced by the vertical direction processing means, and adding the weighted chrominance signal components depending on the correlated values in the horizontal direction and the vertical direction which are detected by the correlated value detection means, to find the plurality of chrominance signal components at the pixel to be processed.

FIG. 1

# FIG. 2

# FIG. 3

(a) ODD FIELD

(b) D3   G R G R G R   • • • • • •   G R G R G R   • • • • • •  } L2

(c) D2   B G B G B G   • • • • • •   B G B G B G   • • • • • •  } L1

(d) D1   G R G R G R   • • • • •   G R G R G R   • • • • • •  } L0

(e) D0   B G B G B G   • • • • • •   B G B G B G   • • • • • •

(f) —————————————————————— L

(g) EVEN FIELD

(h) D3   G R G R G R   • • • • • •   G R G R G R   • • • • • •

(i) D2   B G B G B G   • • • • • •   B G B G B G   • • • • • •  } L2

(j) D1   G R G R G R   • • • • • •   G R G R G R   • • • • • •  } L1

(k) D0   B G B G B G   • • • • • •   B G B G B G   • • • • • •  } L0

(l) ——————————————————————— H
    ——————————————————————— L

FIG. 4

FIG. 5

## FIG. 6

| ODD FIELD | METHOD OF INTERPOLATING G, R, B SIGNAL |
|---|---|
| ODD PIXEL<br><br>$\begin{array}{ccc} G11 & R12 & G13 \\ B21 & G22 & B23 \\ G31 & R32 & G33 \end{array}$ | $Gh = g22$<br>$Bh = (b21+b23)/2$<br>$Rh = \dfrac{g22 * r12}{g12} = \dfrac{2(g22 * r12)}{g11+g13}$<br>$Gv = g22$<br>$Rv = (r12+r32)/2$<br>$Bv = \dfrac{g22 * b21}{g21} = \dfrac{2(g22 * b21)}{g11+g31}$ |
| EVEN PIXEL<br><br>$\begin{array}{ccc} R11 & G12 & R13 \\ G21 & B22 & G23 \\ R31 & G32 & R33 \end{array}$ | $Bh = b22$<br>$Gh = (g21+g23)/2$<br>$Rh = \dfrac{g22 * r12}{g12} = \dfrac{(g21+g23)(r11+r13)}{4g12}$<br>$Bv = b22$<br>$Gv = (g12+g32)/2$<br>$Rv = \dfrac{r21 * g22}{g21} = \dfrac{(r11+r31)(g12+g32)}{4g21}$ |

## FIG. 7

| ODD/ EVEN FIELD | METHOD OF CALCULATING VERTICAL CORRELATED VALUE (Sv) AND HORIZONTAL CORRELATED VALUE (Sh) |
|---|---|
| <table><tr><td>D11</td><td>D12</td><td>D13</td></tr><tr><td>D21</td><td>D22</td><td>D23</td></tr><tr><td>D31</td><td>D32</td><td>D33</td></tr></table> | $Sv = \lvert(d_{11}+2\times d_{12}+d_{13})-(d_{21}+2\times d_{22}+d_{23})\rvert$ $+\lvert(d_{21}+2\times d_{22}+d_{23})-(d_{31}+2\times d_{32}+d_{33})\rvert$ $Sh = \lvert(d_{11}+2\times d_{21}+d_{31})-(d_{12}+2\times d_{22}+d_{32})\rvert$ $+\lvert(d_{12}+2\times d_{22}+d_{32})-(d_{18}+2\times d_{23}+d_{33})\rvert$ |

FIG. 8

FIG. 9

FIG. 10

M

E

N

| $Z_{11}$ | $Z_{12}$ | $Z_{13}$ | $Z_{14}$ | $Z_{15}$ | $Z_{16}$ | $\cdots\cdots$ | $Z_{1M}$ |
| $Z_{21}$ | $Z_{22}$ | $Z_{23}$ | $Z_{24}$ | $Z_{25}$ | $Z_{26}$ | $\cdots\cdots$ | $Z_{2M}$ |
| $Z_{31}$ | $Z_{32}$ | $Z_{33}$ | $Z_{34}$ | $Z_{35}$ | $Z_{36}$ | $\cdots\cdots$ | $Z_{3M}$ |
| $Z_{N1}$ | $Z_{N2}$ | $Z_{N3}$ | $Z_{N4}$ | $Z_{N5}$ | $Z_{N6}$ | $\cdots\cdots$ | $Z_{NM}$ |

FIG. 11

# FIG. 12

EP 1 182 891 A2

## FIG. 13

(a) ▦ INCIDENT LIGHT

(b)

| G | R | G | R | G | R |

ARRANGEMENT OF COLOR FILTERS

(c)

| 1.0 | 1.0 | 1.0 | 0.0 | 0.0 | 0.0 |

SIGNAL LEVEL AT PIXEL

(d)

| 1.0 | 1.0 | 1.0 | 0.5 | 0.0 | 0.0 |

G SIGNAL AFTER INTERPOLATION

(e)

| 1.0 | 1.0 | 0.5 | 0.0 | 0.0 | 0.0 |

R SIGNAL AFTER INTERPOLATION

GENERATION OF CHROMINANCE SIGNAL

(f)

| 1.0 | 1.0 | 1.0 | 0.0 | 0.0 | 0.0 |

MOST SUITABLE G SIGNAL

(g)

| 1.0 | 1.0 | 1.0 | 0.0 | 0.0 | 0.0 |

MOST SUITABLE R SIGNAL

# FIG. 14

EP 1 182 891 A2

FIG. 15

VERTICAL
DRIVING
CIRCUIT

HORIZONTAL
DRIVING
CIRCUIT

FIG. 16

ODD FIELD

(a)

(b)D3 | G | R | G | R | G | R | • • • • • | G | R | G | R | G | R | • • • • • ⎫ L2

(c)D2 | B | G | B | G | B | G | • • • • • | B | G | B | G | B | G | • • • • • ⎬ L1

(d)D1 | G | R | G | R | G | R | • • • • • | G | R | G | R | G | R | • • • • • ⎭ L0

(e)D0 | B | G | B | G | B | G | • • • • • | B | G | B | G | B | G | • • • • •

(f) _____ L

EVEN FIELD

(g)

(h)D3 | G | R | G | R | G | R | • • • • • | G | R | G | R | G | R | • • • • •

(i)D2 | B | G | B | G | B | G | • • • • • | B | G | B | G | B | G | • • • • • ⎫ L2

(j)D1 | G | R | G | R | G | R | • • • • • | G | R | G | R | G | R | • • • • • ⎬ L1

(k)D0 | B | G | B | G | B | G | • • • • • | B | G | B | G | B | G | • • • • • ⎭ L0

(l) _____ H
_____ L

EP 1 182 891 A2

FIG. 17

51

EP 1 182 891 A2

FIG. 18

COLOR-DIFFERENCE-CORRELATION HORIZONTAL INTERPOLATION CIRCUIT — 29

COLOR-DIFFERENCE-CORRELATION VERTICAL INTERPOLATION CIRCUIT — 30

Gh, Rh, Bh

Gv, Rv, Bv

G2, R2, B2

Kh, Kv

25, 31

FIG. 19

# FIG. 20

EP 1 182 891 A2

## FIG. 21

| ODD FIELD | METHOD OF INTERPOLATING G, R, B SIGNAL |
|---|---|
| ODD PIXEL <br><br> G11 R12 G13 <br> B21 G22 B23 <br> G31 R32 G33 | $Gh = G22$ <br> $Bh = (B21+B23)/2$ <br> $Rh = \dfrac{G22 \times R12}{G12} = \dfrac{2(G22 \times R12)}{G11+G13}$ <br> $Gv = G22$ <br> $Rv = (R12+R32)/2$ <br> $Bv = \dfrac{G22 \times B21}{G21} = \dfrac{2(G22 \times B21)}{G11+G31}$ |
| EVEN PIXEL <br><br> R11 G12 R13 <br> G21 B22 G23 <br> R31 G32 R33 | $Bh = B22$ <br> $Gh = (G21+G23)/2$ <br> $Rh = \dfrac{G22 \times R12}{G12} = \dfrac{(G21+G23)(R11+R13)}{4 \times G12}$ <br> $Bv = B22$ <br> $Gv = (G12+G32)/2$ <br> $Rv = \dfrac{R21 \times G22}{G21} = \dfrac{(R11+R31)(G12+G32)}{4 \times G21}$ |

FIG. 22

| ODD FIELD | METHOD OF CALCULATING VERTICAL CORRELATED VALUE (Sv) AND HORIZONTAL CORRELATED VALUE (Sh) |
|---|---|
| ODD PIXEL<br><br>G11 R12 G13<br>B21 G22 B23<br>G31 R32 G33 | $Sv = \mid (G11+G13)/2-(G31+G33)/2 \mid$<br><br>$Sh = \mid (G11+G31)/2-(G13+G33)/2 \mid$ |
| EVEN PIXEL<br><br>R11 G12 R13<br>G21 B22 G23<br>R31 G32 R33 | $Sv = \mid G12-G32 \mid$<br><br>$Sh = \mid G21-G23 \mid$ |

# FIG. 23

ARRANGEMENT
OF COLOR FILTERS
&
SIGNAL LEVEL AT PIXEL

| G 1.0 | R 0.2 | G 0.2 |
|-------|-------|-------|
| B 1.0 | G 0.2 | B 0.2 |
| G 1.0 | R 0.2 | G 0.2 |

INCIDENT LIGHT

$$\begin{cases} Gh=0.2 \\ Gv=0.2 \\ Rh=0.067 \\ Rv=0.2 \\ Bh=0.6 \\ Bv=0.2 \\ Sh=0.8 \\ Sv=0.0 \\ Kh=0.0 \\ Kv=1.0 \end{cases}$$

$$\begin{cases} Go=0.2 \\ Ro=0.2 \\ Bo=0.2 \end{cases}$$

| G 1.0 | R 0.2 | G 0.2 |
|-------|-------|-------|
| B 1.0 | G 0.2 | B 0.2 |
| G 1.0 | R 0.2 | G 0.2 |

$$\begin{cases} Gh=0.6 \\ Gv=0.2 \\ Rh=1.8 \\ Rv=0.2 \\ Bh=0.2 \\ Bv=0.2 \\ Sh=0.8 \\ Sv=0.0 \\ Kh=0.0 \\ Kv=1.0 \end{cases}$$

$$\begin{cases} Go=0.2 \\ Ro=0.2 \\ Bo=0.2 \end{cases}$$

(a)                (b)                (c)                (d)

EP 1 182 891 A2

FIG. 24

| ODD FIELD | METHOD OF INTERPOLATING G, R, B SIGNAL |
|---|---|
| ODD PIXEL<br><br>G11 R12 G13<br>B21 G22 B23<br>G31 R32 G33 | $Gh = G22$<br>$Rh = \dfrac{R12+R32}{2} - \dfrac{G11+G13+G31+G33}{4} + G22$<br>$Bh = \dfrac{B21+B23}{2}$<br>$Gv = G22$<br>$Rv = \dfrac{R12+R32}{2}$<br>$Bv = \dfrac{B21+B23}{2} - \dfrac{G11+G13+G31+G33}{4} + G22$ |
| EVEN PIXEL<br><br>R11 G12 R13<br>G21 B22 G23<br>R31 G32 R33 | $Gh = \dfrac{G21+G23}{2}$<br>$Rh = \dfrac{R11+R13+R31+R33}{4} - \dfrac{G12+G32}{2} + \dfrac{G21+G23}{2}$<br>$Bh = B22$<br>$Gv = \dfrac{G12+G32}{2}$<br>$Rv = \dfrac{R11+R13+R31+R33}{4} + \dfrac{G12+G32}{2} - \dfrac{G21+G23}{2}$<br>$Bv = B22$ |

FIG. 25

EP 1 182 891 A2

ARRANGEMENT
OF COLOR FILTERS
&
SIGNAL LEVEL AT PIXEL

INCIDENT LIGHT

| G 1.0 | R 0.2 | G 0.2 |
|-------|-------|-------|
| B 1.0 | G 0.2 | B 0.2 |
| G 1.0 | R 0.2 | G 0.2 |

Gh=0.2
Gv=0.2
Rh=0.8
Rv=0.2
Bh=0.6
Bv=0.2
Sh=0.8
Sv=0.0
Kh=0.0
Kv=1.0

Go=0.2
Ro=0.2
Bo=0.2

| G 1.0 | R 0.2 | G 0.2 |
|-------|-------|-------|
| B 1.0 | G 0.2 | B 0.2 |
| G 1.0 | R 0.2 | G 0.2 |

Gh=0.6
Gv=0.2
Rh=1.0
Rv=0.2
Bh=0.2
Bv=0.2
Sh=0.8
Sv=0.0
Kh=0.0
Kv=1.0

Go=0.2
Ro=0.2
Bo=0.2

(a)          (b)          (c)          (d)

## FIG. 26

| ODD FIELD | METHOD OF INTERPOLATING G,R,B SIGNAL |
|---|---|
| **ODD PIXEL**<br><br>\| G11 \| B12 \| G13 \| B14 \| G15 \|<br>\| R21 \| G22 \| R23 \| G24 \| R25 \|<br>\| G31 \| B32 \| G33 \| B34 \| G35 \|<br>\| R41 \| G42 \| R43 \| G44 \| R45 \|<br>\| G51 \| B52 \| G53 \| B54 \| G55 \| | $Gh = G33$<br><br>$Rh = \dfrac{G33 \times (R21 + 6 \times R23 + R25)}{4 \times (G22 + G24)}$<br><br>$Bh = \dfrac{4 \times (B32 + B34) \times G33}{G31 + 6 \times G33 + G35}$<br><br>$Gv = G33$<br><br>$Rv = \dfrac{4 \times (R23 + R43) \times G33}{G13 + 6 \times G33 + G53}$<br><br>$Bv = \dfrac{G33 \times (B12 + 6 \times B32 + B52)}{4 \times (G22 + G42)}$ |
| **EVEN PIXEL**<br><br>\| B11 \| G12 \| B13 \| G14 \| B15 \|<br>\| G21 \| R22 \| G23 \| R24 \| G25 \|<br>\| B31 \| G32 \| B33 \| G34 \| B35 \|<br>\| G41 \| R42 \| G43 \| R44 \| G45 \|<br>\| B51 \| G52 \| B53 \| G54 \| B55 \| | $Gh = \dfrac{4 \times (G32 + G34) \times B33}{B31 + 6 \times B33 + B35}$<br><br>$Rh = \dfrac{4 \times (R22 + R24) \times G35}{G21 + 6 \times G23 + G25}$<br><br>$Bh = B33$<br><br>$Gv = \dfrac{4 \times (G23 + G43) \times B33}{B13 + 6 \times B33 + B53}$<br><br>$Rv = \dfrac{4 \times (R22 + R42) \times G33}{G12 + 6 \times G32 + G52}$<br><br>$Bv = B33$ |

EP 1 182 891 A2

## FIG. 27

| ODD FIELD | METHOD OF INTERPOLATING G,R,B SIGNAL |
|---|---|
| **ODD PIXEL**<br><br>| G11 | B12 | G13 | B14 | G15 |<br>| R21 | G22 | R23 | G24 | R25 |<br>| G31 | B32 | G33 | B34 | G35 |<br>| R41 | G42 | R43 | G44 | R45 |<br>| G51 | B52 | G53 | B54 | G55 | | $Gh = G33$<br><br>$Rh = \dfrac{R21 - 2 \times R23 + R25}{8} - \dfrac{G22 + G24}{2} + G33$<br><br>$Bh = \dfrac{B32 + B34}{2} - \dfrac{G31 - 2 \times G33 + G35}{8}$<br><br>$Gv = G33$<br><br>$Rv = \dfrac{R23 + R43}{2} - \dfrac{G13 - 2 \times G33 + G53}{8}$<br><br>$Bv = \dfrac{B12 - 2 \times B32 + B52}{8} - \dfrac{G22 + G42}{2} + G33$ |
| **EVEN PIXEL**<br><br>| B11 | G12 | B13 | G14 | B15 |<br>| G21 | R22 | G23 | R24 | G25 |<br>| B31 | G32 | B33 | G34 | B35 |<br>| G41 | R42 | G43 | R44 | G45 |<br>| B51 | G52 | B53 | G54 | B55 | | $Gh = \dfrac{G32 + G34}{2} - \dfrac{B31 - 2 \times B33 + G35}{8}$<br><br>$Rh = \dfrac{R22 + R24}{2} - \dfrac{G21 + 6 \times G23 + G25}{8} + \dfrac{G32 + G34}{2} - \dfrac{B31 - 2 \times B33 + B35}{8}$<br><br>$Bh = B33$<br><br>$Gv = \dfrac{G23 + G43}{2} - \dfrac{B13 - 2 \times B33 + B53}{8}$<br><br>$Rv = \dfrac{R22 + R42}{2} - \dfrac{G12 + 6 \times G32 + G52}{8} + \dfrac{G23 + G43}{2} - \dfrac{B13 - 2 \times B33 + B53}{8}$<br><br>$Bv = B33$ |

EP 1 182 891 A2

# FIG. 28

| ODD FIELD | METHOD OF INTERPOLATING G,R,B SIGNAL |
|---|---|
| **ODD PIXEL**<br><br>| G11 | B12 | G13 | B14 | G15 |<br>| R21 | G22 | R23 | G24 | R25 |<br>| G31 | B32 | G33 | B34 | G35 |<br>| R41 | G42 | R43 | G44 | R45 |<br>| G51 | B52 | G53 | B54 | G55 | | $Gh = G33$<br><br>$$Rh = \frac{G33 \times (R21 + 6 \times R23 + R25)}{4 \times (G22 + G24)}$$<br><br>$$Bh = \frac{B32 + B34}{2} - \frac{G31 - 2 \times G33 + G35}{8}$$<br><br>$Gv = G33$<br><br>$$Rv = \frac{R23 + R43}{2} - \frac{G13 - 2 \times G33 + G53}{8}$$<br><br>$$Bv = \frac{G33 \times (B12 + 6 \times B32 + B52)}{4 \times (G22 + G42)}$$ |
| **EVEN PIXEL**<br><br>| B11 | G12 | B13 | G14 | B15 |<br>| G21 | R22 | G23 | R24 | G25 |<br>| B31 | G32 | B33 | G34 | B35 |<br>| G41 | R42 | G43 | R44 | G45 |<br>| B51 | G52 | B53 | G54 | B55 | | $$Gh = \frac{G32 + G34}{2} - \frac{B31 - 2 \times B33 + B35}{8}$$<br><br>$$Rh = \frac{4 \times (R22 + R24)}{(G21 + 6 \times G23 + G25)} \times \left( \frac{G32 + G34}{2} - \frac{B31 - 2 \times B33 + B35}{8} \right)$$<br><br>$Bh = B33$<br><br>$$Gv = \frac{G23 + G43}{2} - \frac{B13 - 2 \times B33 + B53}{8}$$<br><br>$$Rv = \frac{2 \times (R22 + R42)}{(G12 + 6 \times G32 + G52)} \times \left( G23 + G43 - \frac{B13 - 2 \times B33 + B53}{4} \right)$$<br><br>$Bv = B33$ |

EP 1 182 891 A2

EP 1 182 891 A2

FIG. 29

ENTIRE IMAGE                    IN AREA k

## FIG. 30

CHROMATIC COLOR /
ACHROMATIC COLOR
JUDGED VALUE $R_k$
(RATIO OF SIGNAL
 AT ALL PIXELS COMPOSING
 CCD TO CORRELATED VALUE)

1

0       $T_{h1}$       $T_{h2}$    CHROMA
INTEGRATED
VALUE $C_k$

EP 1 182 891 A2

FIG. 31

EP 1 182 891 A2